(19) Europäisches Patentamt / European Patent Office / Office européen des brevets

(11) **EP 3 384 710 B1**

(12) **EUROPEAN PATENT SPECIFICATION**

(45) Date of publication and mention
of the grant of the patent:
**10.06.2020 Bulletin 2020/24**

(21) Application number: **16870944.2**

(22) Date of filing: **17.11.2016**

(51) Int Cl.:
**H04W 48/20** *(2009.01)*     **H04W 24/08** *(2009.01)*
**H04W 28/10** *(2009.01)*     **H04W 88/06** *(2009.01)*
**H04W 84/12** *(2009.01)*

(86) International application number:
**PCT/KR2016/013289**

(87) International publication number:
**WO 2017/095048 (08.06.2017 Gazette 2017/23)**

(54) **METHOD FOR SELECTING EXTERNAL ELECTRONIC DEVICE BASED ON DATA TRAFFIC RATE**

VERFAHREN ZUR AUSWAHL EINER EXTERNEN ELEKTRONISCHEN VORRICHTUNG AUF DER BASIS EINER DATENVERKEHRSRATE

PROCÉDÉ DE SÉLECTION D'UN DISPOSITIF ÉLECTRONIQUE EXTERNE SUR LA BASE DU DÉBIT DE TRAFIC DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.12.2015 KR 20150172737**

(43) Date of publication of application:
**10.10.2018 Bulletin 2018/41**

(73) Proprietor: **Samsung Electronics Co., Ltd.
Suwon-si, Gyeonggi-do 16677 (KR)**

(72) Inventors:
• **KIM, Wangyu**
  Suwon-si
  Gyeonggi-do 16582 (KR)
• **LEE, Kyounghan**
  Seoul 03714 (KR)
• **KIM, Moonsoo**
  Seoul 03025 (KR)

(74) Representative: **HGF Limited
Saviour House
9 St. Saviourgate
York YO1 8NQ (GB)**

(56) References cited:
**WO-A1-2011/109052     WO-A1-2015/150717
JP-A- 2015 095 746     KR-A- 20130 055 500
KR-A- 20140 063 334     KR-A- 20140 088 354
KR-A- 20140 116 834     US-A1- 2004 246 922
US-A1- 2014 126 388     US-A1- 2015 098 392**

• **XIN WAN ET AL: "A New AP-Selection Strategy
for High Density IEEE802.11 WLANs",
CYBER-ENABLED DISTRIBUTED COMPUTING
AND KNOWLEDGE DISCOVERY (CYBERC), 2010
INTERNATIONAL CONFERENCE ON, IEEE,
PISCATAWAY, NJ, USA, 10 October 2010
(2010-10-10), pages 52-58, XP031785047, ISBN:
978-1-4244-8434-8**

**Description**

**[Technical Field]**

Embodiments of the present invention relate to a method for selecting an external electronic device (e.g., an access point) and, for example, to a method and electronic device for selecting an access point by using network related information received from access points in a wireless network.

**[Background Art]**

In a wireless network, access points may periodically broadcast messages (e.g., beacon frames) containing supportable network information (e.g., channel information, a data rate, encryption information, etc.) for electronic devices which intend to access thereto. When such a message is received from a certain AP, the electronic device may identify network information of the AP and a name of the AP (e.g., service set identification (SSID)), basic service set identification (BSSID) and also display information about the AP by using received signal strength indication (RSSI) regarding the AP.

US2014/126388 A1 concerns selecting an access point by a wireless terminal. Access points in an area associated with the wireless terminal may be scanned. From the scanned access points, candidate access points may be determined by filtering out improper access points from the scanned access points. A target access point may be selected from the candidate access points based on wireless link quality of each candidate access point.

WO2015/150717 A1 concerns a user device comprising a receiver for establishing a communications link with a wireless network and an access point selecting module for selecting an access point to use in establishing the communications link, the access point selecting module being configured to identify a plurality of access points within range of the user device and for each one of the identified access points: determine a maximum rate of data throughput that is achievable if using the access point to connect to the network; determine the value of a load parameter for the access point, wherein the value of the load parameter is indicative of the apparent demand for resources that the access point is currently experiencing; determine a relative potential capacity of the access point by weighting the maximum rate of data throughput by the load parameter and select an access point to connect to the wireless network.

US2015/098392 A1 concerns wireless communications using a multidimensional algorithm for roaming. In one aspect, an initial set of candidate access points (APs) is produced by a station using a roaming scan. The initial set may be identified based at least in part on an initial metric (e.g., beacon signal strength). A probe signal may be transmitted by the station to at least one of the candidate APs in the initial set and information may be received in response to the probe signals. The station may then identify a reduced set from the initial set based at least in part on the received information, where the reduced set is used to select a target AP. At least one additional metric may be identified and the probe signal may be configured to obtain information corresponding to the additional metrics. This information may be used by the station to select the candidate APs in the reduced set.

**[Disclosure of Invention]**

**[Technical Problem]**

A user may select a desired AP by using the displayed AP information, and in response to this, the electronic device may perform a connection process with the AP. Additionally, the electronic device may store information of the connected AP. Using the stored AP information, the electronic device may perform automatically the connection process.

An electronic device may be located in a network environment in which a number of APs including the same name (Twifi zone, ureadymobile, etc.) are deployed. In this network environment, the electronic device may be connected to a specific AP including higher signal strength among the APs of the same name, based on the signal strength without regard to a data traffic rate. This may cause a user to use a data service at a lower traffic rate.

To address the above-discussed deficiencies, it is a primary object to provide a method and electronic device for selecting an AP including a higher data traffic rate.

Further, various embodiments of the present invention may provide a method and electronic device for estimating an AP data traffic rate by using received AP information and then for offering information associated with the estimated rate to a user.

**[Solution to Problem]**

According to various embodiments of this invention, an electronic device is provided according to claim 1.

According to various embodiments of this invention, an electronic device may include a WiFi interface supporting a short range wireless communication, and a processor electrically connected to the WiFi interface. The processor may be configured to scan a plurality of access points (APs) including same service set identification (SSID) through the WiFi interface; to calculate a data traffic rate for each AP, based on a beacon frame received from each AP; and to select one of the APs, based on the calculated data traffic rate for each AP.

According to various embodiments of this invention, a method implemented by an electronic device is provided according to claim 9.

Dependent claims constitute embodiments of the invention. The embodiments of the following description which are not covered by the appended claims are considered as not being part of the present invention.

## [Advantageous Effects of Invention]

The electronic device and method according to various embodiments may avoid any undesirable case of being connected to an external device (e.g., AP) including a lower data traffic rate, and also offer a stable data service through a connection with a best external device (e.g., estimated to have the highest data traffic rate).

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

## Brief Description of Drawings

For a more complete understanding of the present disclosure and its advantages, reference is now made to the following description taken in conjunction with the accompanying drawings, in which like reference numerals represent like parts:

FIG. 1 illustrates an example network environment according to various embodiments of the present invention.
FIG. 2 illustrates an example electronic device according to various embodiments of the present invention.
FIG. 3 illustrates an example program module according to various embodiments of the present invention.
FIG. 4 illustrates an example method for selecting an access point in a wireless network according to various embodiments of the present invention.
FIGS. 5A and 5B illustrate an examples method for selecting an access point according to various embodiments of the present invention.
FIGS. 6A, 6B, and 6C illustrate an examples wireless network environment according to various embodiments of the present invention.
FIGS. 7 and 8 illustrate an example user interface for offering network information of an access point according to various embodiments of the present invention.
FIG. 9 illustrates an example method for determining a WiFi mode of an access point according to various embodiments of the present invention.

## Mode for the Invention

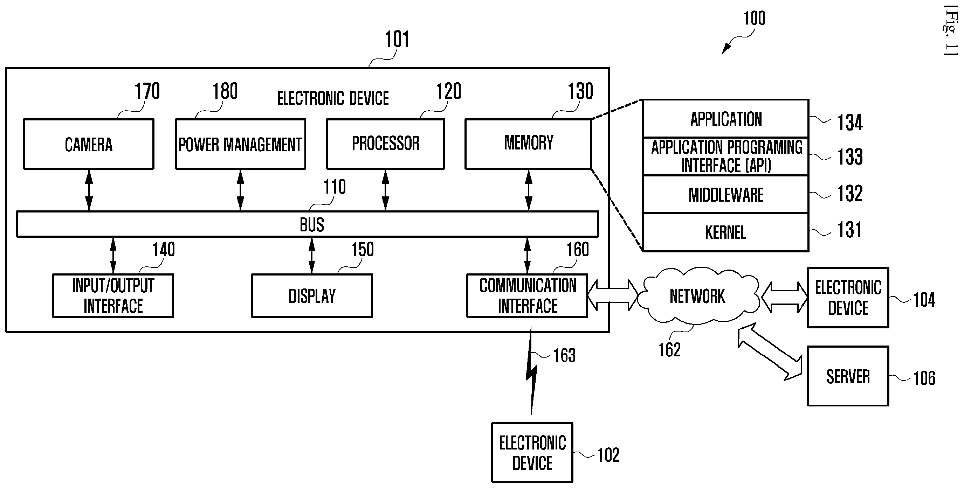

FIGURES 1 through 9, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device.

The present disclosure will be described with reference to the accompanying drawings. Although specific embodiments are illustrated in the drawings and related detailed descriptions are discussed in the present specification, the present disclosure may have various modifications and several embodiments. However, various embodiments of the present disclosure are not limited to a specific implementation form and it should be understood that the present disclosure includes all changes and/or equivalents and substitutes included in the spirit and scope of various embodiments of the present disclosure. In connection with descriptions of the drawings, similar components are designated by the same reference numeral.

The term "include" or "may include" which may be used in describing various embodiments of the present disclosure refers to the existence of a corresponding disclosed function, operation or component which can be used in various embodiments of the present disclosure and does not limit one or more additional functions, operations, or components. In various embodiments of the present disclosure, the terms such as "include" or "have" may be construed to denote a certain characteristic, number, step, operation, constituent element, component or a combination thereof, but may not be construed to exclude the existence of or a possibility of the addition of one or more other characteristics, numbers, steps, operations, constituent elements, components or combinations thereof.

In various embodiments of the present disclosure, the expression "or" or "at least one of A or/and B" includes any or all of combinations of words listed together. For example, the expression "A or B" or "at least A or/and B" may include A, may include B, or may include both A and B.

The expression "1", "2", "first", or "second" used in various embodiments of the present disclosure may modify various components of the various embodiments but does not limit the corresponding components. For example, the above expressions do not limit the sequence and/or importance of the components. The expressions may be used for distinguishing one component from other components. For example, a first user device and a second user device may indicate different user devices although both of them are user devices. For example, without departing from the scope of the present disclosure, a first structural element may be referred to as a second structural element. Similarly, the second structural element also may be referred to as the first structural element.

When it is stated that a component is "coupled to" or "connected to" another component, the component may be directly coupled or connected to another component or a new component may exist between the component and another component. In contrast, when it is stated that a component is "directly coupled to" or "directly connected to" another component, a new component does not exist between the component and another component.

The terms used in describing various embodiments of the present disclosure are only examples for describing a specific embodiment but do not limit the various embodiments of the present disclosure. Singular forms are intended to include plural forms unless the context clearly indicates otherwise.

Unless defined differently, all terms used herein, which include technical terminologies or scientific terminologies, have the same meaning as that understood by a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present description.

An electronic device according to various embodiments of the present disclosure may be a device including a communication function. For example, the electronic device may be one or a combination of a smart phone, a tablet personal computer (PC), a mobile phone, a video phone, an e-book reader, a desktop PC, a laptop PC, a netbook computer, a personal digital assistant (PDA), a camera, and a wearable device (e.g., a head-mounted-device (HMD) such as electronic glasses; electronic clothes; an electronic bracelet; an electronic necklace; an electronic accessary; an electronic tattoo; and a smart watch).

According to some embodiments, the electronic device may be a smart home appliance including a communication function. The smart home appliance may include at least one of a television (TV), a digital video disk (DVD) player, an audio player, an air conditioner, a cleaner, an oven, a microwave oven, a washing machine, an air cleaner, a set-top box, a TV box (e.g., Samsung HomeSyncTM, Apple TVTM, or Google TVTM), game consoles, an electronic dictionary, an electronic key, a camcorder, and an electronic frame.

According to some embodiments, the electronic device may include at least one of various types of medical devices (e.g., magnetic resonance angiography (MRA), Magnetic resonance imaging (MRI), computed tomography (CT), a scanner, an ultrasonic device and the like), a navigation device, a global navigation satellite system (GNSS) receiver, an event data recorder (EDR), a flight data recorder (FDR), a vehicle infotainment device, electronic equipment for a ship (e.g., a navigation device for ship, a gyro compass and the like), avionics, a security device, a head unit for a vehicle, an industrial or home robot, an automatic teller machine (ATM) of financial institutions, a point of sale (POS) device of shops, and a device for internet of things (IoT) (e.g., a fire alarm, various sensors, electric or gas meter units, a sprinkler, a thermostat, a streetlamp, a toaster, sport outfits, a hot-water tank, a heater, a boiler and the like).

According to some embodiments, the electronic device may include at least one of furniture or a part of a building/structure, an electronic board, an electronic signature receiving device, a projector, and various types of measuring devices (e.g., a water meter, an electricity meter, a gas meter, a radio wave meter and the like) including a camera function. The electronic device according to various embodiments of the present disclosure may be one or a combination of the above described various devices. Further, the electronic device according to various embodiments of the present disclosure may be a flexible device. It is apparent to those skilled in the art that the electronic device according to various embodiments of the present disclosure is not limited to the above described devices.

Hereinafter, an electronic device according to various embodiments of the present disclosure will be described with reference to the accompanying drawings. The term "user" used in various embodiments may refer to a person who uses an electronic device or a device (e.g., an artificial intelligence electronic device) which uses an electronic device.

FIG. 1 illustrates an example network environment 100 including an electronic device 101 according to various embodiments of the present disclosure. Referring to FIG. 1, the electronic device 101 may include various components including a bus 110, a processor 120, a memory 130, an input/output interface 140, a display 150, a communication interface 160, and a power management 170.

The bus 110 may be a circuit connecting the above described components and transmitting communication (e.g., a control message) between the above described components.

The processor 120 may receive commands from other components (e.g., the memory 130, the input/output interface 140, the display 150, the communication interface 160, or the power management 170) through the bus 110, analyze the received commands, and execute calculation or data processing according to the analyzed commands.

The memory 130 stores commands or data received from the processor 120 or other components (e.g., the input/output interface 140, the display 150, the communication interface 160, or the power management 170) or generated by the processor 120 or other components. The memory 130 may store software and/or a program. For example, the program may include a kernel 131, middleware 132, an application programming interface (API) 133, and an application program (or an application) 134. At least part of the kernel 131, the middleware 132 or the API 133 may refer to an operating system (OS).

The kernel 131 controls or manages system resources (e.g., the bus 110, the processor 120, or the memory 130) used for executing an operation or function implemented by the remaining other programming modules, for example, the middleware 132, the API 133, or the application 134. Further, the kernel 131 provides an interface for accessing individual components of the electronic device 101 from the middleware 132, the API 133, or the application 134 to control or manage the components.

The middleware 132 performs a relay function of allowing the API 133 or the application 134 to communicate with the kernel 131 to exchange data. Further, in operation requests received from the application 134, the middleware 132 performs a control for the operation requests (e.g., scheduling or load balancing) by using a method of assigning a priority, by which system resources (e.g., the bus 110, the processor 120, the memory 130 and the like) of the electronic device 101 can be used, to the application 134.

The API 133 is an interface by which the application 134 can control a function provided by the kernel 131 or the middleware 132 and includes, for example, at least one interface or function (e.g., command) for a file control, a window control, image processing, or a character control.

According to various embodiments, the application 134 may include a short message service (SMS)/multimedia messaging service (MMS) application, an email application, a calendar application, an alarm application, a health care application (e.g., application measuring quantity of exercise or blood sugar) or an environment information application (e.g., application providing information on barometric pressure, humidity or temperature). Additionally, or alternatively, the application 134 may be an application related to an information exchange between the electronic device 101 and an external electronic device (e.g., electronic device 104). The application 134 related to the information exchange may include, for example, a notification relay application for transferring particular information to the external electronic device or a device management application for managing the external electronic device.

For example, the notification relay application may include a function of transmitting notification information generated by another application (e.g., an SMS/MMS application, an email application, a health care application or an environment information application) of the electronic device 101 to the external electronic device (e.g., electronic device 104). Additionally, or alternatively, the notification relay application may receive notification information from, for example, the external electronic device 104, and provide the received notification information to the user. The device management application may manage (e.g., install, remove, or update) at least a part of functions of the electronic device. For example, the device management application may turn on/off the external electronic device (or some components of the external electronic device), control a brightness of the display of the external electronic device or communicate with the electronic device 101, an application executed in the external electronic device 104, or a service (e.g., call service or message service) provided by the external electronic device 104.

According to various embodiments, the application 134 may include an application designated according to an attribute (e.g., type of electronic device) of the external electronic device 104. For example, when the external electronic device 104 is an MP3 player, the application 134 may include an application related to music reproduction. Similarly, when the external electronic device 104 is a mobile medical device, the application 134 may include an application related to health care. According to an embodiment, the application 134 may include at least one of an application designated to the electronic device 101 and an application received from an external electronic device (e.g., server 106 or electronic device 104).

The input/output interface 140 transmits a command or data input from the user through an input/output device 140 (e.g., a sensor, a keyboard, or a touch screen) to the processor 120, the memory 130, the communication interface 160, or the display 150 through, for example, the bus 110. For example, the input/output interface 140 may provide data on a user's touch input through a touch screen to the processor 120. Further, the input/output interface 140 may output a command or data received through, for example, the bus 110, from the processor 120, the memory 130, the communication interface 160, or the power management 170 through the input/output device (e.g., a speaker or a display). For example, the input/output interface 140 may output voice data processed through the processor 120 to the user through the speaker.

The display 150 may include, for example, liquid crystal display (LCD), flexible display, transparent display, light-emitting diode(LED) display, organic light-emitting diode (OLED) display, microelectromechanical systems (MEMS) display, or electronic paper display. The display 150 may visually offer, for example, various contents (e.g., text, image, video, icon, symbol, etc.) to users. The display 150 may include a touch screen and receive, for example, a touch, gesture, proximity, or hovering input using an electronic pen or a user's body. According to an embodiment, the display 150 may be one or more displays. For example, the display 150 may be included in the electronic device 101 or included in an external device (e.g., the electronic device 102 or 104) including a wired or wireless connection with the electronic device 101, thus outputting information offered by the electronic device 101 to users.

According to an embodiment, the display 150 may be attachable to or detachable from the electronic device 101. For example, the display 150 may include an interface which can be mechanically or physically connected with the electronic device 101. According to an embodiment, in case the display 150 is detached (e.g., separated) from the electronic device 101 by a user's selection, the display 150 may receive various control signals or image data from the power management 170 or the processor 120, e.g., through wireless communication.

The communication interface 160 may establish communication between the electronic device 101 and any external device (e.g., the first external electronic device 102, the second external electronic device 104, or the server 106). For example, the communication interface 160 may be connected with a network 162 through wired or wireless communication and thereby communicate with any external device (e.g., the first external electronic device 102, the second external electronic device 104, or the server 106).

According to an embodiment, the electronic device 101 may be connected with the first external electronic device 102 and the second external electronic device 104 without using the communication interface 160. For example, based on at least one of a magnetic sensor, a contact sensor, a light sensor, and the like that is equipped in the electronic device 101, the electronic device 101 may sense whether at least one of the first and second external electronic devices 102 and 104 is contacted with at least part of the electronic device 101, or whether at least one of the first and second external electronic device 102 and 104, respectively, is attached to at least part of the electronic device 101.

Wireless communication may use, as cellular communication protocol, at least one of long-term evolution (LTE), LTE advance (LTE-A), code division multiple access (CDMA), wideband CDMA (WCDMA), universal mobile telecommunications system (UMTS), wireless broadband (WiBRO), global system for mobile communications (GSM), and the like, for example. A short-range communication 163 may include, for example, at least one of Wi-Fi, Bluetooth, near field communication (NFC), magnetic secure transmission or near field magnetic data stripe transmission (MST), and global navigation satellite system (GNSS), and the like. The GNSS may include at least one of, for example, a global positioning system (GPS), a global navigation satellite system (Glonass), a Beidou navigation satellite system (hereinafter, referred to as "Beidou"), and Galileo (european global satellite-based navigation system). Hereinafter, the "GPS" may be interchangeably used with the "GNSS" in the present disclosure. Wired communication may include, for example, at least one of universal serial bus (USB), high definition multimedia interface (HDMI), recommended standard-232 (RS-232), plain old telephone service (POTS), and the like. The network 162 may include telecommunication network, for example, at least one of a computer network (e.g., LAN or WAN), internet, and a telephone network.

The first and second external electronic devices 102 and 104 may be identical to, or different from, the electronic device 101. According to an embodiment, the first and second external electronic devices 102 and 104 may include, for example, a plurality of electronic devices. According to an embodiment, the server 106 may include a single server or a group of servers. According to various embodiments, all or part of operations executed in the electronic device 101 may be executed in other electronic device(s), such as the first and second electronic devices 102 and 104 or the server 106.

According to an embodiment, in case the electronic device 101 is required to perform a certain function or service automatically or by request, the electronic device 101 may request another device (e.g., the electronic device 102 or 104 or the server 106) to execute instead, or additionally at least part, of at least one or more functions associated with the required function or service. The requested device may execute the requested function and deliver the result of execution to the electronic device 101. Then, the electronic device 101 may offer the required function or service, based on the received result or by processing the received result. For the above, cloud computing technology, distributed computing technology, or client-server computing technology may be used, for example.

The camera 170 is a device capable of obtaining still images and moving images. According to an embodiment, the camera 170 may include at least one image sensor (e.g., a front sensor or a rear sensor), a lens, an image signal processor (ISP), or a flash (e.g., LED, xenon lamp, etc.).

The power management 180 may manage electric power of the electronic device 101. According to an embodiment, the power management 180 may include a power management integrated circuit (PMIC), a charger integrated circuit (IC), or a battery or fuel gauge. For example, when the power of the electronic device 101 is turned on, the power management 180 (e.g., the PMIC) may supply electric power of the battery to other elements (e.g., the processor 120). Also, the power management 180 may receive a command from the processor 120 and manage the supply of power in response to the command. For example, in response to a command received from the processor 120, the power management 180 may supply electric power to the display 140, the camera 170, and the like. Meanwhile, the PMIC may have a wired and/or wireless charging type. The wireless charging type may include, for example, a magnetic resonance type, a magnetic induction type, or an electromagnetic type. An additional circuit for wireless charging may be further used such as a coil loop, a resonance circuit, or a rectifier. The battery gauge may measure the residual amount of the battery and a voltage, current or temperature in a charging process. The battery may include, for example, a rechargeable battery and/or a solar battery.

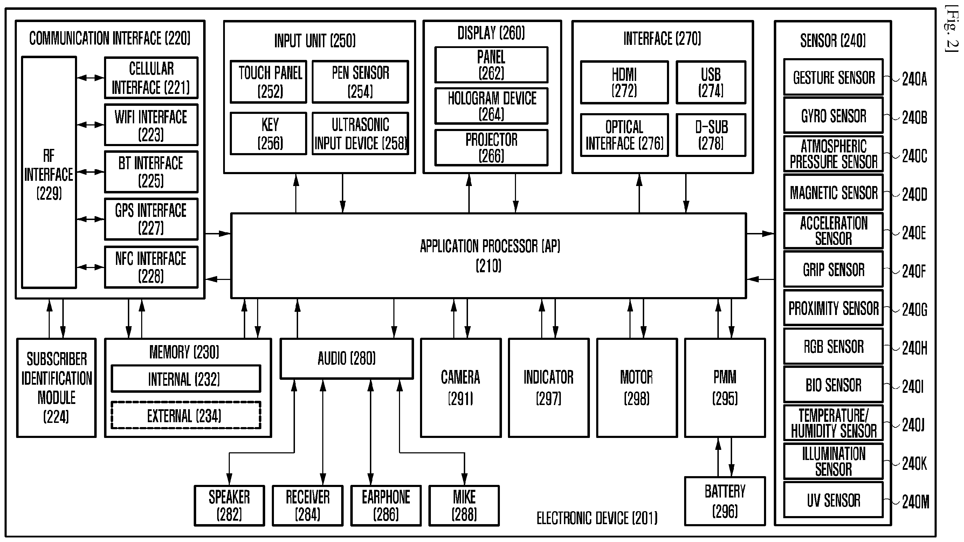

FIG. 2 illustrates an example configuration of an electronic device 201 according to various embodiments. For example, the electronic device 201 is capable of including part or all of the components in the electronic device 101 shown in FIG. 1. The electronic device 201 is capable of including one or more processors 210 (e.g., application processors (APs)), a communication interface 220, a subscriber identification module (SIM) 224, a memory 230, a sensor 240, an input device 250, a display 260, an interface 270, an audio 280, a camera 291, a power management 295, a battery 296, an indicator 297, and a motor 298.

The processor 210 is capable of driving, for example, an operating system or an application program to control a plurality of hardware or software components connected to the processor 210, processing various data, and performing operations. The processor 210 may be implemented as, for example, a system on chip (SoC). According to an embodiment, the processor 210 may further include a graphic processing unit (GPU) and/or an image signal processor. The processor 210 may also include at least part of the components shown in FIG. 2, e.g., a cellular interface 221. The processor 210 is capable of loading commands or data received from at least one of other components (e.g., a non-volatile memory) on a volatile memory, processing the loaded commands or data. The processor 210 is capable of storing various data in a non-volatile memory.

The communication interface 220 may include the same or similar configurations as the communication interface 160 shown in FIG. 1. For example, the communication interface 220 is capable of including a cellular interface 221, WiFi interface 223, Bluetooth (BT) interface 225, GNSS interface 226 (e.g., a GPS interface, Glonass interface, Beidou interface or Galileo interface), NFC interface 227, and Radio Frequency (RF) interface 229.

The cellular interface 221 is capable of providing a voice call, a video call, an SMS service, an Internet service, etc., through a communication network, for example. According to an embodiment, the cellular interface 221 is capable of identifying and authenticating an electronic device 201 in a communication network by using a subscriber identification module (SIM) 224 (e.g., a SIM card). According to an embodiment, the cellular interface 221 is capable of performing at least part of the functions provided by the processor 210. According to an embodiment, the cellular interface 221 is also capable of including a communication processor (CP).

Each of the WiFi interface 223, the BT interface 225, the GNSS interface 226, and the NFC interface 227 is capable of including a processor for processing data transmitted or received through the corresponding interface. MST interface is capable of including a processor for processing data transmitted or received through the corresponding interface. According to embodiments, at least part of the cellular interface 221, WiFi interface 223, BT interface 225, GNSS interface 226, NFC interface 227, and MST interface (e.g., two or more interfaces) may be included in one integrated chip (IC) or one IC package.

The RF interface 229 is capable of transmission/reception of communication signals, e.g., RF signals. The RF interface 229 is capable of including a transceiver, a power amp module (PAM), a frequency filter, a low noise amplifier (LNA), an antenna, etc. According to another embodiment, at least one of the following interfaces: a cellular interface 221, a WiFi interface 223, a BT interface 225, a GNSS interface 226, an NFC interface 227, and an MST interface is capable of transmission/reception of RF signals through a separate RF interface.

The SIM interface 224 is capable of including a card including a subscriber identification module (SIM) and/or an embodied SIM. The SIM module 224 is also capable of containing unique identification information, e.g., integrated circuit card identifier (ICCID), or subscriber information, e.g., international mobile subscriber identity (IMSI).

The memory 230 (e.g., memory 130 shown in FIG. 1) is capable of including a built-in memory 232 or an external memory 234. The built-in memory 232 is capable of including at least one of the following: a volatile memory, e.g., a dynamic RAM (DRAM), a static RAM (SRAM), a synchronous dynamic RAM (SDRAM), etc.; and a non-volatile memory, e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash memory, an NOR flash memory, etc.), a hard drive, a solid state drive (SSD), etc.

The external memory 234 is also capable of including a flash drive, e.g., a compact flash (CF), a secure digital (SD), a micro secure digital (Micro-SD), a mini secure digital (Mini-SD), an extreme digital (xD), a multi-media card (MMC), a memory stick, etc. The external memory 234 is capable of being connected to the electronic device 201, functionally and/or physically, through various interfaces.

The memory 230 is capable of storing payment information and a payment application serving as one of the application programs 24D. The payment information may refer to credit card numbers and PINs, corresponding to a credit card. The payment information may also include user authentication information, e.g., fingerprints, facial features, voice information, etc.

When the payment application is executed by the processor 210, it may enable the processor 210 to perform: an interaction with the user to make payment (e.g., displaying a screen to select a card (or a card image) and obtaining information (e.g., a card number) corresponding to a selected card (e.g., a pre-specified card) from payment information); and an operation to control magnetic field communication (e.g., transmitting the card information to an external device (e.g., a card reading apparatus) through the NFC interface 227 or MST interface). The following description provides detailed embodiments with operations of the components described above, referring to FIG. 2 to FIG. 9.

The sensor 240 is capable of measuring/detecting a physical quantity or an operation state of the electronic device 201, and converting the measured or detected information into an electronic signal. The sensor 240 is capable of including at least one of the following: a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., a red, green and blue (RGB) sensor), a biometric sensor 2401, a temperature/humidity sensor 240J, an illuminance sensor 240K, and a ultraviolet (UV) sensor 240M. Additionally or alternatively, the sensor 240 is capable of further including an E-nose sensor, an electromyography (EMG) sensor, an electroencephalogram (EEG) sensor, an electrocardiogram (ECG) sensor, an infrared (IR) sensor, an iris sensor and/or a fingerprint sensor. The sensor 240 is capable of further including a control circuit for controlling one or more sensors included therein. In embodiments, the electronic device 201 is capable of including a processor, configured as part of the processor 210 or a separate component, for controlling the sensor 240. In this case, while the processor 210 is operating in sleep mode, the processor is capable of controlling the sensor 240.

The input unit 250 may include, for example, a touch panel 252, a digital pen sensor 254, a key 256, or an ultrasonic input unit 258. The touch panel 252 may use, for example, at least one of a capacitive type, a resistive type, an infrared type, and an ultrasonic type. Also, the touch panel 252 may further include a control circuit. The touch panel 252 may further include a tactile layer to offer a tactile feedback to a user. According to an embodiment, the touch panel 252 may include a pressure sensor (or a force sensor) capable of measuring the strength or pressure of a user's touch. This pressure sensor may be formed integrally with or separately from the touch panel 252.

The digital pen sensor 254 may be a part of the touch panel or include a separate sheet for recognition. The key 256 may include, for example, a physical button, an optical key, or a keypad. The ultrasonic input unit 258 may detect ultrasonic waves occurring at an input tool through a microphone (e.g., 288) and thereby identify data corresponding to the detected ultrasonic waves.

The display 260 is capable of including a panel 262, a hologram unit 264, or a projector 266. The panel 262 may include the same or similar configurations as the display 150 shown in FIG. 1. The panel 262 may be implemented to be flexible, transparent, or wearable. The panel 262 may also be incorporated into one circuit together with the touch panel 252. The hologram unit 264 is capable of showing a stereoscopic image in the air by using light interference. The projector 266 is capable of displaying an image by projecting light onto a screen. The screen may be located inside or outside of the electronic device 201. According to an embodiment, the display 260 may further include a control circuit for controlling the panel 262, the hologram unit 264, or the projector 266.

The interface 270 is capable of including a high-definition multimedia interface (HDMI) 272, a universal serial bus (USB) 274, an optical interface 276, or a D-subminiature (D-sub) 278. The interface 270 may be included in the communication interface 160 shown in FIG. 1. Additionally or alternatively, the interface 270 is capable of including a mobile high-definition link (MHL) interface, a secure digital (SD) card/multimedia card (MMC) interface, or an infrared data association (IrDA) standard interface.

The audio 280 is capable of providing bidirectional conversion between a sound and an electronic signal. At least part of the components in the audio 280 may be included in the input/output interface 140 shown in FIG. 1. The audio 280 is capable of processing sound information input or output through a speaker 282, a receiver 284, earphones 286, microphone 288, etc.

The camera 291 refers to a device capable of taking both still and moving images. According to an embodiment, the camera 291 is capable of including one or more image sensors (e.g., a front image sensor or a rear image sensor), a lens, an image signal processor (ISP), a flash (e.g., an LED or xenon lamp), etc.

The power management 295 is capable of managing power of the electronic device 201. According to an embodiment, the power management 295 is capable of including a power management integrated circuit (PMIC), a charger IC, or a battery or fuel gauge. The PMIC may employ wired charging and/or wireless charging methods. Examples of the wireless charging method are magnetic resonance charging, magnetic induction charging, and electromagnetic charging. To this end, the PIMC may further include an additional circuit for wireless charging, such as a coil loop, a resonance circuit, a rectifier, etc. The battery gauge is capable of measuring the residual capacity, charge in voltage, current, or temperature of the battery 296. The battery 296 takes the form of either a rechargeable battery or a solar battery.

The indicator 297 is capable of displaying a specific status of the electronic device 201 or a part thereof (e.g., the processor 210), e.g., a boot-up status, a message status, a charging status, etc. The motor 298 is capable of converting an electrical signal into mechanical vibrations, such as, a vibration effect, a haptic effect, etc. Although not shown, the electronic device 201 is capable of further including a processing unit (e.g., GPU) for supporting a mobile TV. The processing unit for supporting a mobile TV is capable of processing media data pursuant to standards, e.g., digital multimedia broadcasting (DMB), digital video broadcasting (DVB), or mediaFloTM, etc.

Each of the elements described in the present disclosure may be formed with one or more components, and the names of the corresponding elements may vary according to the type of the electronic device. In various embodiments, the electronic device may include at least one of the above described elements described in the present disclosure, and may exclude some of the elements or further include other additional elements. Further, some of the elements of the electronic device according to various embodiments may be coupled to form a single entity while performing the same functions as those of the corresponding elements before the coupling.

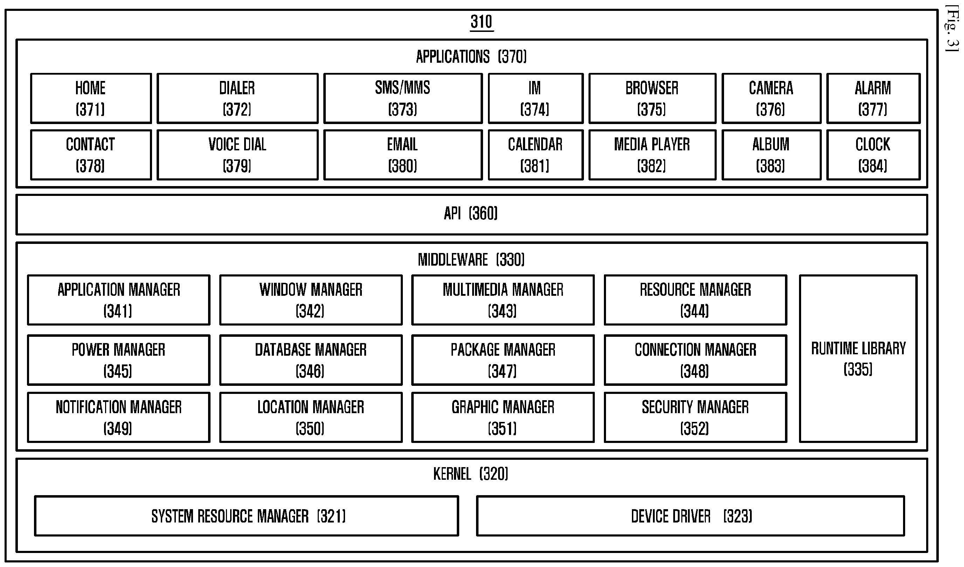

FIG. 3 illustrates an example programming module according to various embodiments. According to an embodiment, the program module 310 (e.g., programs 131-134 shown in FIG. 1) is capable of including an operation system (OS) for controlling resources related to the electronic device (e.g., electronic device 11) and/or various applications (e.g., application programs 134 shown in FIG. 1) running on the OS. The OS may be Android, iOS, Windows, Symbian, Tizen, Bada, etc.

The program module 310 is capable of including a kernel 320, middleware 330, application programming interface (API) 360 and/or applications 370. At least part of the program module 310 may be preloaded on the electronic device or downloaded from a server (e.g., an electronic device 102 or 104, server 106, etc.).

The kernel 320 (for example, kernel 14A) may include a system resource manager 321 and/or a device driver 323. The system resource manager 321 may include, for example, a process manager, a memory manager, and a file system manager. The system resource manager 321 may perform a system resource control, allocation, and recall. The device driver 323 may include, for example, a display driver, a camera driver, a Bluetooth driver, a shared memory driver, a USB driver, a keypad driver, a WiFi driver, and an audio driver. Further, according to an embodiment, the device driver 312 may include an inter-process communication (IPC) driver.

The middleware 330 may provide a function required in common by the applications 370. Further, the middleware 330 may provide a function through the API 360 to allow the applications 370 to efficiently use limited system resources within the electronic device. According to an embodiment, the middleware 330 (for example, the middleware 14B) may include at least one of a runtime library 335, an application manager 341, a window manager 342, a multimedia manager 343, a resource manager 344, a power manager 345, a database manager 346, a package manager 347, a connection manager 348, a notification manager 349, a location manager 350, a graphic manager 351, and a security manager 352.

The runtime library 335 may include, for example, a library module used by a complier to add a new function through a programming language while the applications 370 are executed. According to an embodiment, the runtime library 335 executes input and output, management of a memory, a function associated with an arithmetic function and the like.

The application manager 341 may manage, for example, a life cycle of at least one of the applications 370. The window manager 342 may manage GUI resources used on the screen. The multimedia manager 343 may detect a format required for reproducing various media files and perform an encoding or a decoding of a media file by using a codec suitable for the corresponding format. The resource manager 344 manages resources such as a source code, a memory, or a storage space of at least one of the applications 370.

The power manager 345 may operate together with a basic input/output system (BIOS) to manage a battery or power and provides power information required for the operation. The database manager 346 may manage generation, search, and change of a database to be used by at least one of the applications 370. The package manager 347 may manage an installation or an update of an application distributed in a form of a package file.

The connection manager 348 may manage, for example, a wireless connection such as WiFi or Bluetooth. The notification manager 349 may display or notify a user of an event such as an arrival message, an appointment, a proximity alarm or the like, in a manner that does not disturb the user. The location manager 350 may manage location information of the electronic device. The graphic manager 351 may manage a graphic effect provided to the user or a user interface related to the graphic effect. The security manager 352 provides a general security function required for a system security or a user authentication. According to an embodiment, when the electronic device (for example, the electronic device 11) has a call function, the middleware 330 may further include a telephony manager for managing a voice of the electronic device or a video call function.

The middleware 330 is capable of including modules configuring various combinations of functions of the above described components. The middleware 330 is capable of providing modules specialized according to types of operation systems to provide distinct functions. The middleware 330 may be adaptively configured in such a way as to remove part of the existing components or to include new components.

The API 360 (for example, API 133) may be a set of API programming functions, and may be provided with a different configuration according to an operating system. For example, in Android or iOS, a single API set may be provided for each platform. In Tizen, two or more API sets may be provided.

The applications 370 (e.g., application programs 14D) may include one or more applications for performing various functions, e.g., home 371, diary 372, SMS/MMS 373, instant message (IM) 374, browser 375, camera 376, alarm 377, context 378, voice dial 379, email 380, calendar 381, media player 382, album 383, clock 384, health care (e.g., an application for measuring amount of exercise, blood sugar level, etc.), and environment information (e.g., an application for providing atmospheric pressure, humidity, temperature, etc.).

According to an embodiment, the applications 370 are capable of including an application for supporting information exchange between an electronic device (e.g., electronic device 31) and an external device (e.g., electronic devices 32 and 34), which is hereafter called 'information exchange application'). The information exchange application is capable of including a notification relay application for relaying specific information to external devices or a device management application for managing external devices.

For example, the notification relay application is capable of including a function for relaying notification information, created in other applications of the electronic device (e.g., SMS/MMS application, email application, health care application, environment information application, etc.) to external devices (e.g., electronic devices 32 and 34). In addition, the notification relay application is capable of receiving notification information from external devices to provide the received information to the user.

The device management application is capable of managing (e.g., installing, removing or updating) at least one function of an external device (e.g., electronic devices 32 and 34) communicating with the electronic device. Examples of the function are a function of turning-on/off the external device or part of the external device, a function of controlling the brightness (or resolution) of the display, applications running on the external device, services provided by the external device, etc. Examples of the services are a call service, messaging service, etc.

According to an embodiment, the applications 370 are capable of including an application (e.g., a health care application of a mobile medical device, etc.) specified attributes of an external device (e.g., electronic devices 102 and 104). According to an embodiment, the applications 370 are capable of including applications received from an external device (e.g., a server 106, electronic devices 102 and 104). According to an embodiment, the applications 370 are capable of including a preloaded application or third party applications that can be downloaded from a server. It should be understood that the components of the program module 310 may be called different names according to types of operating systems.

According to various embodiments, at least part of the program module 310 can be implemented with software, firmware, hardware, or any combination of two or more of them. At least part of the program module 310 can be implemented (e.g., executed) by a processor (e.g., processor 120). At least part of the programing module 310 may include modules, programs, routines, sets of instructions or processes, etc., in order to perform one or more functions.

Various embodiments of the present invention provide a handheld electronic device capable of transmitting, to a card reading apparatus, card information carried by magnetic field signals, and thus making payment for costs. Various embodiments also provide a handheld electronic device capable of making payment for costs, etc., through communication with a card reading apparatus, although the apparatus is not equipped with an NFC interface, without modifying the existing solution, as if a magnetic card is used against the apparatus. Therefore, the present invention is capable of leading to activating offline mobile payment.

The term 'module' as used in various embodiments of the present disclosure may mean a unit including one of hardware, software, and firmware or any combination of two or more of them. The 'module' may be interchangeable with the term 'unit,' 'logic,' 'logical block,' 'component,' or 'circuit.' The 'module' may be the smallest unit of an integrated component or a part thereof. The 'module' may be the smallest unit that performs one or more functions or a part thereof. The 'module' may be mechanically or electronically implemented. For example, the 'module' according to various embodiments of the present invention may include at least one of the following: application-specific integrated circuit (ASIC) chips, field-programmable gate arrays (FPGAs), and programmable-logic devices for performing certain operations, which are now known or will be developed in the future.

At least part of the method (e.g., operations) or system (e.g., modules or functions) according to various embodiments can be implemented with instructions as programming modules that are stored in computer-readable storage media. One or more processors (e.g., processor 120) can execute instructions, thereby performing the functions. An example of the computer-readable storage media may be a memory 130. At least part of the programming modules can be implemented (executed) by a processor. At least part of the programing module may include modules, programs, routines, sets of instructions or processes, etc., in order to perform one or more functions.

Examples of computer-readable media include: magnetic media, such as hard disks, floppy disks, and magnetic tape; optical media such as compact disc read only memory (CD-ROM) disks and digital versatile disc (DVD); magneto-optical media, such as floptical disks; and hardware devices that are specially configured to store and perform program instructions (e.g., programming modules), such as read-only memory (ROM), random access memory (RAM), flash memory, etc. Examples of program instructions include machine code instructions created by assembly languages, such as a compiler, and code instructions created by a high-level programming language executable in computers using an interpreter, etc. The described hardware devices may be configured to act as one or more software modules in order to perform the operations and methods described above, or vice versa.

Modules or programming modules according to various embodiments may include one or more components, remove part of them described above, or include new components. The operations performed by modules, programming modules, or the other components, according to various embodiments, may be executed in serial, parallel, repetitive or heuristic fashion. Part of the operations can be executed in any other order, skipped, or executed with additional operations.

The embodiments described in the present disclosure are merely provided to assist in a comprehensive understanding of the invention and the technology thereof and are not suggestive of limitation. Although embodiments of the invention have been described in detail above, it should be understood that many variations and modifications of the basic inventive concept herein described, which may be apparent to those skilled in the art, will still fall within the scope of the embodiments of the invention as defined in the appended claims.

An electronic device according to various embodiments of this invention is provided in accordance with claim 1.

The processor may compare the first data traffic rate with the second data traffic rate and then select an external electronic device including a greater data traffic rate. Also, the processor may randomly select one of the first and second data traffic rates and then select an external electronic device corresponding to the selected rate. Also, the processor may select the first external electronic device when the first data traffic rate is greater than a predetermined value. Similarly, the processor may select the second external electronic device when the second data traffic rate is greater than the predetermined value. If both rates are greater than the predetermined value, the processor may select an external electronic device based on another rule (e.g., signal strength).

Each of the first network information and the second network information may contain wireless local area network (WLAN) specification information or bandwidth information. In this case, the processor may determine a corresponding data traffic rate between the first and second data traffic rates, based on the WLAN specification information or the bandwidth information.

The processor may receive antenna information about each of the first and second external electronic devices and then adjust, as a part of the determining operation, a corresponding data traffic rate between the first and second data traffic rates, based on the received antenna information.

The processor may adjust, as a part of the determining operation, a corresponding data traffic rate between the first and second data traffic rates, based on the signal strength for each of the first and second external electronic devices.

The electronic device further includes a second communication interface. In this case, the processor adjusts the first and second data traffic rates, based on whether the second communication interface is activated.

Each of the first network information and the second network information may contain information about a degree of utilization. In this case, the processor may adjust a corresponding data traffic rate between the first and second data traffic rates, based on the information about a degree of utilization.

The processor may obtain a first signal strength corresponding to the first external electronic device and a second signal strength corresponding to the second external electronic device by using the communication interface; determine a first attenuation factor corresponding to the first external electronic device, based on the first signal strength, and also determine a second attenuation factor corresponding to the second external electronic device, based on the second signal strength; and adjust, as a part of the determining operation, a corresponding data traffic rate between the first and second data traffic rates by using a corresponding attenuation factor between the first and second attenuation factors.

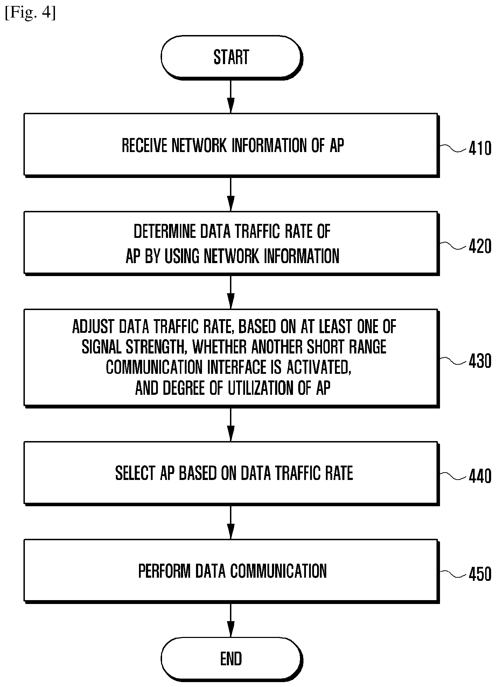

FIG. 4 illustrates an example method for selecting an access point in a wireless network according to various embodiments of the present invention.

Referring to FIG. 4, at operation 410, the electronic device 101 (e.g., the processor 120) may receive network information (e.g., a beacon frame) of the access point (AP) (e.g., the electronic device 102) through the communication interface 160 (e.g., the WiFi interface 323). The beacon frame of IEEE 802.11 may contain tag information associated with a mode (in other words, a standard or a version) of WiFi which is supportable at the AP. For example, the tag information may include at least one of an extended supported rate, a high throughput capability (HTC), and a very high throughput capability (VHTC). According to various embodiments, an operation of selecting an AP that satisfies the designated signal strength may be performed before the operation 410. For example, the electronic device 101 (e.g., the processor 120) may obtain the signal strength of each AP, select an AP satisfying the designated signal strength from among the APs on the basis of the obtained signal strength, and receive network information from the selected AP.

At operation 420, the electronic device 101 (e.g., the processor 120) may determine a data traffic rate of the AP by using the received network information, e.g., tag information associated with a WiFi mode. For example, the processor 120 may determine a WiFi mode of the AP, based on the tag information (e.g., data traffic rate information and bandwidth information of a communication channel). The processor 120 may set the data traffic rate, based on whether the communication interface 160 of the electronic device 101 supports multi input multi output (MIMO), and based on the determined WiFi mode. Depending on the WiFi mode and whether MIMO is supportable, the data traffic rate may be determined as shown in Table 1.

Table 1

[Table 1]

| Mode | MIMOMax Data Rate (Mbps) | SISOMax Data Rate (Mbps) |
|---|---|---|
| 802.11b | 6 | 6 |
| 802.11g | 23 | 23 |
| 802.11a | 24 | 24 |
| 802.11n HT20 | 90 | 45 |
| 802.11n HT40 | 184 | 92 |
| 802.11ac HT20 | 120 | 60 |
| 802.11ac HT40 | 278 | 139 |
| 802.11ac HT80 | 600 | 300 |

The electronic device 101 (e.g., the processor 120) may also determine the data traffic rate, based on the signal strength information. For example, the processor 120 may calculate the signal strength (e.g., RSSI) of a beacon frame received from the AP and then, if a value of the calculated signal strength is smaller than a predetermined critical value (e.g., -70 dBm), may set the data traffic rate to the lowest value, e.g., '1', regardless of a WiFi mode and whether MIMO is supportable. The reason of setting the data traffic rate to '1' may be for excluding the AP from selection.

At operation 430, the electronic device 101 (e.g., the processor 120) may adjust the data traffic rate, based on at least one of the signal strength of a beacon frame, whether another short range communication interface is activated, and a degree of utilization of the AP. For example, the electronic device 101 (e.g., the processor 120) may determine an attenuation factor so as to adjust the data traffic rate.

For example, the electronic device 101 (e.g., the processor 120) may determine the first attenuation factor (RSSI attenuation factor) for each WiFi mode, based on the signal strength (e.g., RSSI). Depending on the WiFi mode and the signal strength, the first attenuation factor may be determined as shown in Table 2. As shown in Table 2, the size of the attenuation factor may be in inverse proportion to the size of RSSI. Namely, as the signal strength is weaker, a supportable data traffic rate of the AP for the electronic device 102 in the wireless network environment may be lowered. Additionally, regardless of the WiFi mode, the attenuation factor may be determined as "(100+RSSI)/30.0" when RSSI is equal to or smaller than a predetermined minimum value (e.g., -71dBm).

Table 2

[Table 2]

| Mode | RSSI (dBm) | Attenuation Factor |
|---|---|---|
| 802.11b802.11g | RSSI > -60 | 1.0 |
| | RSSI > -71 | 0.9 |
| 802.11a | RSSI > -65 | 1.0 |
| | RSSI > -68 | 0.87 |
| | RSSI > -71 | 0.78 |
| 802.11n HT20, 2GHz | RSSI > -60 | 1.0 |
| | RSSI > -71 | 0.9 |

(continued)

| Mode | RSSI (dBm) | Attenuation Factor |
|---|---|---|
| 802.11n HT20, 5GHz | RSSI > -65 | 1.0 |
| | RSSI > -68 | 0.87 |
| | RSSI > -71 | 0.78 |
| 802.11n HT40 | RSSI > -61 | 1.0 |
| | RSSI > -66 | 0.76 |
| | RSSI > -71 | 0.60 |
| 802.11ac HT20 | RSSI > -65 | 1.0 |
| | RSSI > -68 | 0.87 |
| | RSSI > -71 | 0.78 |
| 802.11ac HT40802.11ac HT80 | RSSI > -52 | 1.00 |
| | RSSI > -59 | 0.75 |
| | RSSI > -68 | 0.54 |
| | RSSI > -71 | 0.46 |
| - | RSSI ≤ -71 | (100+RSSI)/30.0 |

In case another short range communication interface is used, a supportable data traffic rate of the AP for the electronic device 101 in the WiFi network environment may be lowered. Further, in case a frequency band of a WiFi interface is proximate to that of another short range communication interface, a supportable data traffic rate of the AP for the electronic device 101 in the WiFi network environment may be lowered. Therefore, when another short range communication interface (e.g., the BT interface 225) is used, the processor 120 may differently set the attenuation factor depending on the frequency band of the AP. For example, in a state where the BT interface 225 that supports 2.4GHz is used, the second attenuation factor (BT attenuation factor) may be set to the first value (e.g., 0.9) smaller than '1' when the AP supports 5GHz, and may be set to the second value (e.g., 0.3) smaller than the first value when the AP supports 2GHz. If the BT interface 225 is not used, the second attenuation factor may be set to '1' regardless of the frequency band of the AP.

The beacon frame received from the AP may contain information indicating a degree of utilization of the AP. For example, the beacon frame received from an AP that supports 802.11k may contain tag information named as "QBSS load element" in which a value named as "CU (Channel Utilization)" may be contained.

The range of CU may be from 0 to 255, in which such numerals may indicate a degree of utilizing a communication channel at the AP. For example, as the numeral is higher, the communication channel may be in a busier state. Alternatively, as the numeral is lower, the communication channel may be in a busier state. According as the numeral is higher (or lower), a supportable data traffic rate of the communication channel for the electronic device 101 may be lowered.

Therefore, the electronic device 101 (e.g., the processor 120) may differently set the attenuation factor depending on such a degree of utilization. For example, if a higher CU means a busier state of the communication channel, the processor 120 may set the third attenuation factor (CU attenuation factor) to '1' when the numeral of CU is smaller than 200, and set the third attenuation factor to the first value smaller than '1' when the numeral of CU is equal to or greater than 200. The first value (cu_factor) may be calculated using the following Equation 1:

$$cu\_factor = -1.0/(max-knee)*cu + max/(max-knee) \dots\dots\dots\dots\dots (1)$$

where max is 255, knee is 200, and cu is a value of channel utilization.

By multiplying the attenuation factor (e.g., the first, second, and third attenuation factors) and the data traffic rate, the electronic device 101 (e.g., the processor 120) may estimate (calculate) the data traffic rate which is actually supportable by the AP in the wireless network environment. The processor 120 may store (e.g., as shown in Table 3) mode information, a RSSI, an attenuation factor, a maximum rate, and an estimate data rate (EDR). Additionally, the processor 120 may classify APs into various groups (e.g., as shown in Table 4), based on EDR.

Table 3

[Table 3]

| Mode | | RSSI | RSSI Attenuation Factor | Max Rate(Mbps) | EDR(Mbps) |
|---|---|---|---|---|---|
| 11ac | VHT80 | -52 | 1 | 600 | 600 |
| | | -59 | 0.75 | | 450 |
| | | -68 | 0.54 | | 324 |
| | | -71 | 0.46 | | 276 |
| | | Else | (100+RSSI)/30 | 1 | [0,1] |
| | VHT40 | -52 | 1 | 278 | 278 |
| | | -59 | 0.75 | | 209 |
| | | -68 | 0.54 | | 150 |
| | | -71 | 0.46 | | 128 |
| | | Else | (100+RSSI)/30 | 1 | [0,1] |
| | VHT20 | -65 | 1 | 120 | 120 |
| | | -68 | 0.87 | | 104 |
| | | -71 | 0.78 | | 94 |
| | | Else | (100+RSSI)/30 | 1 | [0,1] |
| 11n | HT40 | -61 | 1 | 184 | 184 |
| | | -66 | 0.76 | | 140 |
| | | -71 | 0.6 | | 110 |
| | | Else | (100+RSSI)/30 | 1 | [0,1] |
| | HT20(5GHz) | -65 | 1 | 90 | 90 |
| | | -68 | 0.87 | | 78 |
| | | -71 | 0.78 | | 70 |
| | | Else | (100+RSSI)/30 | 1 | [0,1] |
| | HT20(2GHz) | -60 | 1 | 90 | 90 |
| | | -71 | 0.9 | | 81 |
| | | Else | (100+RSSI)/30 | 1 | [0,1] |
| 11a | | -65 | 1 | 24 | 24 |
| | | -68 | 0.87 | | 21 |
| | | -71 | 0.78 | | 19 |
| | | Else | (100+RSSI)/30 | 1 | [0,1] |
| 11b | | -60 | 1 | 23 | 23 |
| | | -71 | 0.9 | | 21 |
| | | Else | (100+RSSI)/30 | 1 | [0,1] |

(continued)

| Mode | RSSI | RSSI Attenuation Factor | Max Rate(Mbps) | EDR(Mbps) |
|---|---|---|---|---|
| 11g | -60 | 1 | 6 | 6 |
| | -71 | 0.9 | | 5 |
| | Else | (100+RSSI)/30 | 1 | [0,1] |

Table 4

[Table 4]

| Group | EDR |
|---|---|
| Group 1 | 276~600 |
| Group 2 | 94~209 |
| Group 3 | 70~90 |
| Group 4 | 19~24 |
| Group 5 | 5~6 |
| Group 6 | 0~1 |

At operation 440, the electronic device 101 (e.g., the processor 120) may select an AP, based on the data traffic rate. For example, the electronic device 101 may select a specific AP including the highest EDR from among APs (e.g., in Group 1). If there is no AP belonging to Group 1, the AP may be selected in another group. The processor 120 may perform a connection with the selected AP.

At operation 450, the electronic device 101 (e.g., the processor 120) may perform data communication with the connected AP.

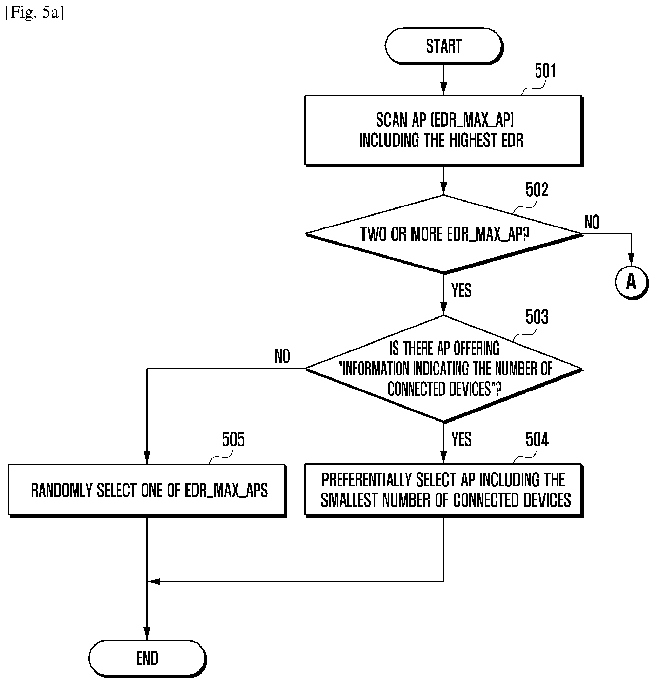

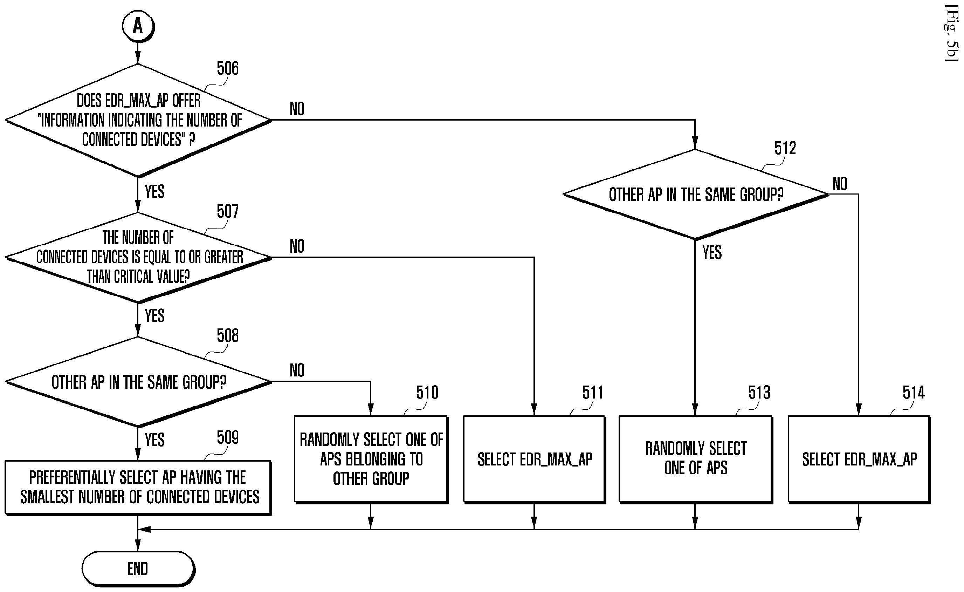

FIGS. 5A and 5B illustrate an example method for selecting an access point according to various embodiments of the present invention.

At operation 501, the electronic device 101 (e.g., the processor 120) may scan an AP including the highest EDR from among APs.

At operation 502, the electronic device 101 (e.g., the processor 120) may determine whether there are two or more APs including the highest EDR.

If it is determined at the operation 502 that there are two or more APs (EDR_max_APs) including the highest EDR, the processor 120 may further determine at operation 503 whether there is an AP offering "information indicating the number of connected devices" from among EDR_max_APs. The beacon frame received from an AP may contain information indicating the number of devices connected to the AP. For example, the beacon frame received from a certain AP that supports 802.11k may contain tag information named as "QBSS load element", which may contain a value named as "station count (SC)". Namely, SC may mean the number of electronic devices connected to a corresponding communication channel of the AP.

If it is determined at the operation 503 that there is an AP (SC_AP) offering "information indicating the number of connected devices", the electronic device 101 (e.g., the processor 120) may preferentially select at operation 504 a SC-AP including the smallest number of connected devices from among SC_APs. Therefore, various embodiments of this invention may prevent a concentrated connection of many electronic devices to a single AP.

If it is determined at the operation 503 that there is no SC_AP, the electronic device 101 (e.g., the processor 120) may randomly select one of EDR_max_APs at operation 505.

If it is determined at the operation 502 that there is a single EDR_max_AP, the electronic device 101 (e.g., the processor 120) may further determine at operation 506 whether the EDR_max_AP offers "information indicating the number of connected devices?.

If it is determined at the operation 506 that the EDR_max_AP offers "information indicating the number of connected devices", the electronic device 101 (e.g., the processor 120) may further determine at operation 507 whether the number of devices connected to the AP is equal to or greater than a predetermined critical value.

If it is determined at the operation 507 that the number of devices connected to the EDR_max_AP is equal to or greater than the critical value (e.g., 150), the electronic device 101 (e.g., the processor 120) may further determine at operation 508 whether there is any other AP in the same group as the EDR_max_AP.

If it is determined at the operation 508 that there is any other AP in the same group, the electronic device 101 (e.g., the processor 120) may preferentially select at operation 509 an AP including the smallest number of connected devices from among such APs. For example, if a certain AP among APs of group 1 has a SC value greater than a critical value even though including the highest EDR, this EDR_max_AP is excluded from selection and an AP including the lowest SC value may be selected from among the rest APs of group 1.

If it is determined at the operation 508 that there is no other AP in the same group, the electronic device 101 (e.g., the processor 120) may randomly select at operation 510 one of APs belonging to a certain group (e.g., a one-level lower group) other than the group of the EDR_max_AP.

If it is determined at the operation 507 that the number of devices connected to the EDR_max_AP is smaller than a critical value (e.g., 150), the electronic device 101 (e.g., the processor 120) may select at operation 511 the EDR_max_AP as an AP to be connected.

If it is determined at the operation 506 that the EDR_max_AP fails to offer "information indicating the number of connected devices", the electronic device 101 (e.g., the processor 120) may determine at operation 512 whether there is any other AP in the same group.

If it is determined at operation 512 that there is any other AP in the same group, the electronic device 101 (e.g., the processor 120) may randomly select at operation 513 one of APs in the group.

If it is determined at the operation 512 that there is no other AP in the same group, the electronic device 101 (e.g., the processor 120) may select at operation 514 the EDR_max_AP as an AP to be connected.

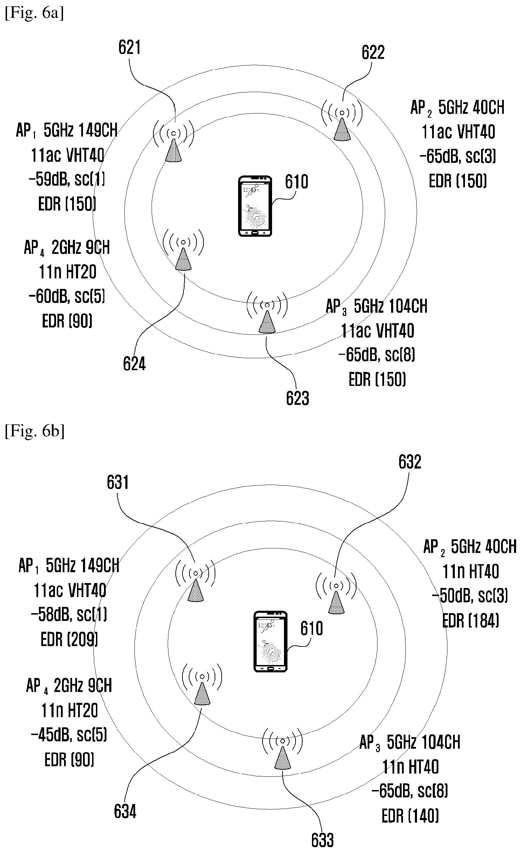

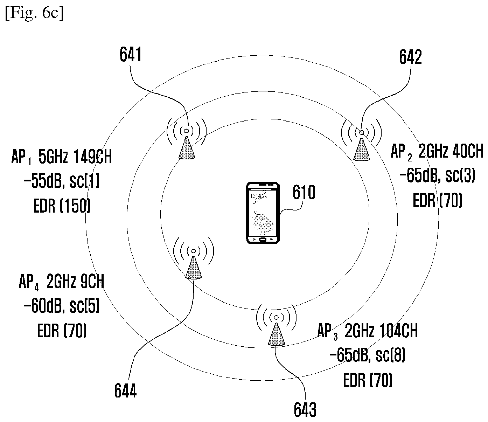

FIGS. 6A, 6B, and 6C illustrate an example wireless network environment according to various embodiments of the present invention. As shown, the wireless network may include, for example, four APs and an electronic device 610 to be connected to one of them.

Referring to 6A, an API 621, an AP2 622, an AP3 623 and an AP4 624 may belong to the same group (e.g., group 2). Among these APs, the AP4 624 including the lowest EDR may be excluded from selection. All of the API 621, the AP2 622 and the AP3 623 have the same EDR '150' and may support 802.11k. Since the API 621 has the lowest SC value "1", the electronic device 610 may select the API 621.

Referring to 6B, an API 631, an AP2 632 and an AP3 633 may belong to the same group (e.g., group 2), whereas an AP4 634 may belong to another group (e.g., group 3). The electronic device 610 may select an AP, to be connected, from among the API 631, the AP2 632 and the AP3 633 in group 2 including a higher group rank. If all of the API 631, the AP2 632 and the AP3 633 in group 2 can support 802.11k, the electronic device 610 may select the API 631 including the lowest SC value.

Referring to 6C, an AP1 641 may belong to group 2, whereas an AP2 642, an AP3 643 and an AP4 644 may belong to group 3. The electronic device 610 may select the AP1 641 including a higher group rank and then be connected to the AP1 641.

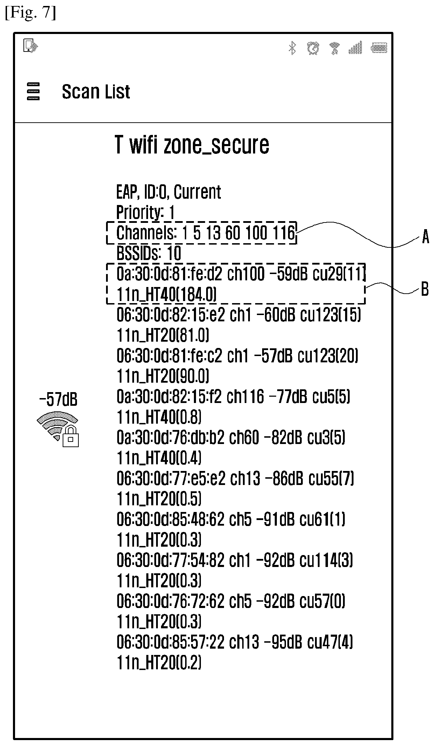

FIG. 7 illustrates an example user interface for offering network information of an access point according to various embodiments of the present invention.

The electronic device 101 (e.g., the processor 120) may receive network information (e.g., a beacon frame) of an access point (AP) (e.g., the electronic device 102) through the communication interface 160 (e.g., the WiFi interface 323). The electronic device 101 (e.g., the processor 120) may estimate EDR by using the network information and then store the estimated EDR together with the network information in the memory 130. Also, in response to a user's request for offering AP information through the I/O interface 140, the processor 120 may display the EDR together with the AP information (e.g., RSSI, WiFi mode, CU, SC, etc.) through the display 150. For example, referring to FIG. 7, the electronic device 101 may scan APs equally named as SSID "T wifi zone_secure". The scanned APs may support a plurality of communication channels (e.g., 1, 5, 60, 100, and 116) ("A" in FIG. 7). A unique BSSID may be assigned to each communication channel. Thus, even though the communication channels have the same number (e.g., even though the communication channel of API and the communication channel of AP2 have the same number), such communication channels may be distinguished from each other by means of BSSID. A user can recognize information about each BSSID through a screen as shown in FIG. 7. For example, in case of BSSID "0a:30:0d:81:fe:d2" ("B" in FIG. 7), the processor 120 may display a communication channel number (e.g., ch100), RSSI (e.g., '-59db'), CU (e.g., cu:29), SC (e.g., 11), WiFi mode (e.g., (802).11n_HT40), or EDR (e.g., 184.0) on the display 150.

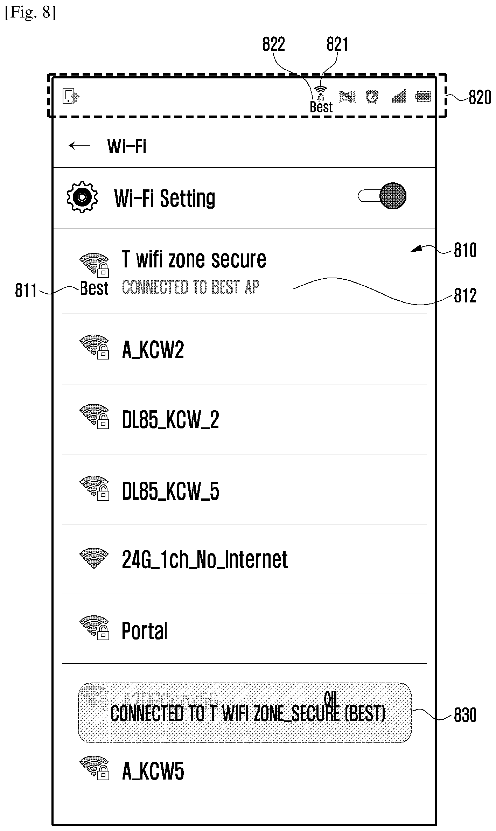

FIG. 8 is a diagram illustrating a user interface for offering network information of an access point according to various embodiments of the present invention.

Referring to FIG. 8, the electronic device 101 may scan APs and display each SSID. The electronic device 101 may estimate EDRs with regard to the scanned APs by using, for example, the processor shown in FIG. 4. When estimation is completed, the electronic device 101 may display SSIDs in the descending order of EDR. Alternatively or additionally, the electronic device 101 may notify a user that an AP located at the top in a list 810 is a best AP (e.g.,

EDR_max_AP). For example, letters "BEST" 811 may be displayed together with an antenna-shaped image near the corresponding SSID. Therefore, a user can select, from among the scanned APs, a best AP estimated to offer a stable data service.

Also, the electronic device 101 may select one of APs as an AP to be connected. For example, an AP "T wifi zone_secure" including the highest EDR may be selected automatically (or in response to a user input). The electronic device 101 may perform a process of connecting with the selected AP "T wifi zone_secure". When the connection is completed, the electronic device 101 may notify a user that the best AP is connected. For example, as shown, letters "BEST" 822 may be displayed together with an antenna-shaped image 821 representing the connected AP in an indicator region 820. Further, a popup message 812, "Connected to best AP", may be displayed near the SSID of the corresponding AP. Additionally, a popup window 830 may be displayed.

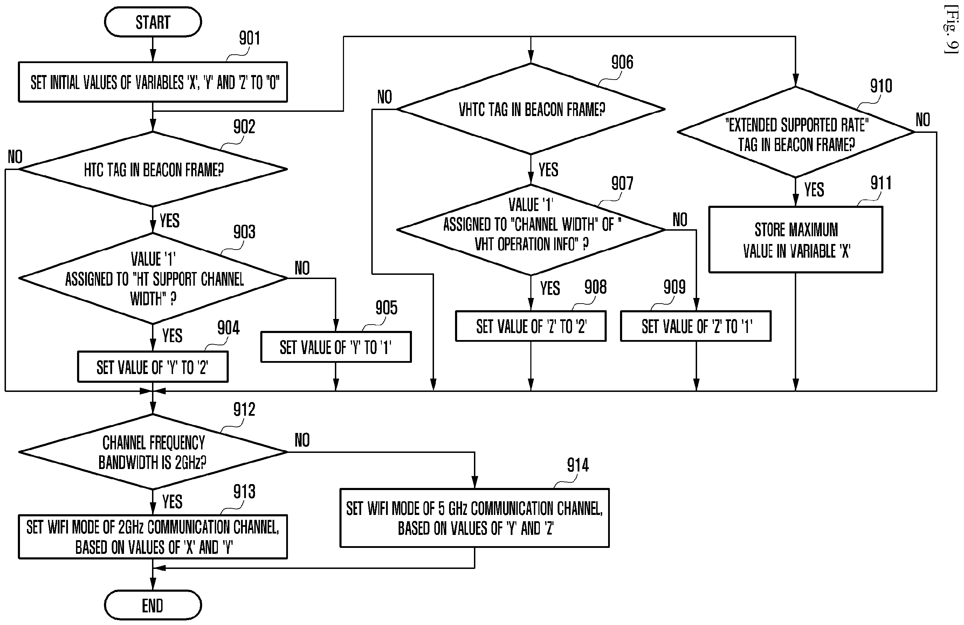

FIG. 9 illustrates an example method for determining a WiFi mode of an access point according to various embodiments of the present invention. The method shown in FIG. 9 may be used for determining a WiFi mode in the process shown in FIG. 4. Also, the method shown in FIG. 9 may be performed for each BSSID of the scanned APs.

At operation 901, the electronic device 101 (e.g., the processor 120) may set initial values of variables 'x', 'y' and 'z'. The variable 'x' may be used as a variable for distinguishing 802.11b from 802.11g in a communication channel that supports 2GHz, and the initial value thereof may be set to '0'. The variable 'y' may be used as a variable for storing HTC information of an AP, and the initial value thereof may be set to '0'. The variable 'z' may be used as a variable for storing VHTC information of an AP, and the initial value thereof may be set to '0'.

At operation 902, the electronic device 101 (e.g., the processor 120) may determine whether there is an HTC tag in a beacon frame. If it is determined at the operation 902 that there is the HTC tag, the electronic device 101 (e.g., the processor 120) may further determine at operation 903 whether a value assigned to "HT support channel width" in the beacon frame is '1'. If it is determined at the operation 903 that the assigned value is '1' (this may mean supporting channel bandwidths "20MHz" and "40MHz"), the electronic device 101 (e.g., the processor 120) may set the value of 'y' to '2' at operation 904. If it is determined at the operation 903 that the assigned value is not '1', the electronic device 101 (e.g., the processor 120) may set the value of 'y' to '1' at operation 905.

At operation 906, the electronic device 101 (e.g., the processor 120) may determine whether there is a VHTC tag in the beacon frame. If it is determined at the operation 906 that there is the VHTC tag, the electronic device 101 (e.g., the processor 120) may further determine at operation 907 whether a value assigned to "channel width" of "VHT operation info" in the beacon frame is '1'. If it is determined at the operation 907 that the assigned value is '1' (this means supporting a channel bandwidth "80MHz"), the electronic device 101 (e.g., the processor 120) may set the value of 'z' to '2' at operation 908. If it is determined at the operation 907 that the assigned value is not '1', the electronic device 101 (e.g., the processor 120) may set the value of 'z' to '1' at operation 909.

At operation 910, the electronic device 101 (e.g., the processor 120) may determine whether there is an "extended supported rate" tag in the beacon frame. If it is determined at the operation 910 that there is the "extended supported rate" tag, the electronic device 101 (e.g., the processor 120) may store, in the variable 'x', the maximum value from among values indicated as the extended supported rate at operation 911.

The first process including the operations 902 to 905, the second process including the operations 906 to 909, and the third process including the operations 910 to 911 may be performed simultaneously or sequentially.

At operation 912, the electronic device 101 (e.g., the processor 120) may determine whether a communication channel corresponding to BSSID of an AP has a frequency bandwidth of 2GHz.

If it is determined at the operation 912 that the frequency bandwidth is 2GHz, the electronic device 101 (e.g., the processor 120) may set, at operation 913, a WiFi mode of the 2GHz communication channel, based on the values of 'x' and 'y'. For example, the WiFi mode of the 2GHz communication channel may be set as shown in Table 5.

Table 5

[Table 5]

| x | y | Mode |
|---|---|---|
| - | 2 | 802.11n HT40 |
| - | 1 | 802.11n HT20 |
| 54 | 0 | 802.11g |
| Less than 54 | 0 | 802.11b |

If it is determined at the operation 912 that the frequency bandwidth is not 2GHz (namely, 5GHz), the electronic device 101 (e.g., the processor 120) may set, at operation 914, a WiFi mode of the 5 GHz communication channel, based on the values of 'y' and 'z'. For example, the WiFi mode of the 5GHz communication channel may be set as shown in Table 6.
Table 6

[Table 6]

| y | z | Mode |
|---|---|---|
| - | 2 | 802.11ac HT80 |
| 2 | 1 | 802.11ac HT40 |
| 1 | 1 | 802.11ac HT20 |
| 2 | 0 | 802.11n HT40 |
| 1 | 0 | 802.11n HT20 |
| 0 | 0 | 802.11a |

According to various embodiments, in a storage medium which records thereon commands, these commands are, when executed by at least one processor, configured to cause the at least one processor to perform at least one operation. In an electronic device including a communication interface and a processor, the at least one operation may include operations of obtaining a signal strength for each of plurality of external electronic devices through a short range wireless communication by using the communication interface; selecting first and second external electronic devices satisfying designated signal strength from among the plurality of external electronic devices, based on the signal strength; receiving first network information corresponding to the first external electronic device and second network information corresponding to the second external electronic device through the short range wireless communication by using the communication interface; determining a first data traffic rate of the first external electronic device, based on the first network information, and also determine a second data traffic rate of the second external electronic device, based on the second network information; selecting one of the first and second external electronic devices, based on at least one of the first and second data traffic rates; and communicating data with the selected external electronic device through the short range wireless communication.

The term "module" used in this disclosure may refer to a certain unit that includes one of hardware, software and firmware or any combination thereof. The module may be interchangeably used with unit, logic, logical block, component, or circuit, for example. The module may be the minimum unit, or part thereof, which performs one or more particular functions. The module may be formed mechanically or electronically. For example, the module disclosed herein may include at least one of ASIC (Application-Specific Integrated Circuit) chip, FPGAs (Field-Programmable Gate Arrays), and programmable-logic device, which have been known or are to be developed.

At least part of the device (e.g., modules or functions thereof) or method (e.g., operations) according to various embodiments may be implemented as commands stored, e.g., in the form of program module, in a computer-readable storage medium. In case commands are executed by a processor, the processor may perform a particular function corresponding to that commands. The computer-readable storage medium may be, for example, the memory 130. According to various embodiments, at least a part of the programming module may be implemented in software, firmware, hardware, or a combination of two or more thereof. At least some of the program module may be implemented (e.g., executed) by, for example, the processor. At least some of the program module may include, for example, a module, a program, a routine, a set of instructions, and/or a process for performing one or more functions.

The non-transitory computer-readable recording medium may include magnetic media such as a hard disk, a floppy disk, and a magnetic tape, optical media such as a Compact Disc Read Only Memory (CD-ROM) and a Digital Versatile Disc (DVD), magneto-optical media such as a floptical disk, and hardware devices specially configured to store and perform a program instruction. In addition, the program instructions may include high class language codes, which can be executed in a computer by using an interpreter, as well as machine codes made by a compiler. The aforementioned hardware device may be configured to operate as one or more software modules in order to perform the operation of various embodiments of the present disclosure, and vice versa.

A module or programming module according to this disclosure may include or exclude at least one of the above-discussed elements or further include any other element. The operations performed by the module, programming module or any other element according to this disclosure may be executed sequentially, in parallel, repeatedly, or by a heuristic method. Additionally, some operations may be executed in different orders or omitted, or any other operation may be added.

Although the present disclosure has been described with an exemplary embodiment, various changes and modifications may be suggested to one skilled in the art. It is intended that the present disclosure encompass such changes and modifications as fall within the scope of the appended claims.

**Claims**

1. An electronic device comprising:

   a first and second communication interface (160, 220), respectively supporting a first and second short range wireless communication; and
   a processor (120, 210) configured to:

   obtain a signal strength for each of a plurality of external electronic devices through the first short range wireless communication using the first communication interface (160, 220);
   select first and second external electronic devices satisfying a designated signal strength from the plurality of external electronic devices based on the signal strength;
   receive first network information corresponding to the first external electronic device and second network information corresponding to the second external electronic device through the first short range wireless communication using the first communication interface (160, 220);
   determine a first data traffic rate of the first external electronic device based on the first network information and determine a second data traffic rate of the second external electronic device based on the second network information;
   determine an adjusted first data traffic rate and an adjusted second data traffic rate based on whether the second communication interface (160, 220) is activated;
   select at least one of the first or second external electronic devices based on at least one of the first or second adjusted data traffic rates; and
   communicate data with the selected external electronic device through the first short range wireless communication.

2. The electronic device of claim 1, wherein the processor (120, 210) is further configured to:

   receive information related to each of the first and second external electronic devices, wherein the received information includes information related to a degree of utilization; and
   further adjust the adjusted first and second data traffic rates based on the received information.

3. The electronic device of claim 1, wherein the processor (120, 210) is further configured to further adjust the adjusted first and second data traffic rates based on the signal strength for each of the first and second external electronic devices.

4. The electronic device of claim 1, wherein the processor (120; 210) is further configured to display information related to the selected external electronic device to be distinguished from information related to a non-selected other external electronic device.

5. The electronic device of claim 1, wherein the processor (120; 210) is further configured to:

   determine a first attenuation factor corresponding to the first external electronic device based on a first signal strength corresponding to the first external electronic device;
   determine a second attenuation factor corresponding to the second external electronic device based on a second signal strength corresponding to the second external electronic device; and
   further adjust the adjusted first and second data traffic rates using the corresponding first and second attenuation factors.

6. The electronic device as claimed in claim 1 wherein
   the first communication interface is a WiFi interface (223, 323) supporting the first short range wireless communication; and
   the processor (120, 210) is operably connected to the WiFi interface (223, 323) and is configured to:

   scan a plurality of access points, Aps, having a same service set identification, SSID, through the WiFi interface (223, 323); and
   determine a data traffic rate by calculating a data traffic rate for each AP based on a beacon frame received from each AP.

**7.** The electronic device of claim 6, wherein operation of calculating the data traffic rate comprises:

determining the data traffic rate of the AP based on information associated with a mode of the first short range wireless communication in a beacon frame received from the AP;

determining an attenuation factor based on at least one of a signal strength of the beacon frame or a degree of utilization of the AP contained in the beacon frame; and

calculating an estimate data rate, EDR, of the AP by multiplying the attenuation factor and the data traffic rate.

**8.** The electronic device of claim 7, wherein if the AP supports a plurality of communication channels identified by basic service set identification, BSSID, and if the electronic device receives the beacon frame for each of the plurality of communication channels, the processor (120, 210) is further configured to calculate the EDR for each of the plurality of communication channels.

**9.** A method for operating an electronic device having a first and second communication interface (160, 220) supporting respective first and second short range wireless communications, the method comprising:

obtaining a signal strength for each of a plurality of external electronic devices through the first short range wireless communication;

selecting first and second external electronic devices satisfying a designated signal strength from the plurality of external electronic devices based on the signal strength;

receiving (410) first network information corresponding to the first external electronic device and second network information corresponding to the second external electronic device through the first short range wireless communication;

determining (420) a first data traffic rate of the first external electronic device based on the first network information and determine a second data traffic rate of the second external electronic device based on the second network information;

determining (430) an adjusted first data traffic rate and an adjusted second data traffic rate based on whether the second communication interface (160, 220) is activated;

selecting (440) at least one of the first or second external electronic devices based on at least one of the first or second data traffic rates; and

communicating (450) data with the selected external electronic device through the first short range wireless communication.

**10.** A method as claimed in claim 9, wherein :
the first data traffic rate of the first external electronic device and the second data traffic rate of the second external electronic device are determined based on information associated with a first short range wireless communication standard or version supportable by the first external electronic device and by the second external electronic device in signals received from the first and second external electronic devices through the first and second short range wireless communication, and the method further comprises:

determining a first attenuation factor based on at least one of a signal strength of the signal or a degree of utilization of the first external electronic device whereby the first data traffic rate of the first external electronic device is adjusted by multiplying the attenuation factor and the first data traffic rate; and

determining a second attenuation factor based on at least one or a signal strength of the signal or a degree of utilization of the second external electronic device whereby the second data traffic rate of the second external electronic device is adjusted by multiplying the attenuation factor and the second data traffic rate,

whereby the first or second external electronic device is selected based on the adjusted data traffic rate.

**11.** The method of claim 10, wherein selection of the first or second external electronic devices comprises:

if one of the first and second external electronic devices has a highest data traffic rate, selecting the first or second external electronic device having the highest adjusted data traffic rate; and

if both the first and second external electronic devices have the highest adjusted data traffic rate, selecting from the first and second external electronic devices an external electronic device having the smallest number of connected devices.

**12.** The method of claim 10, wherein selection of the first or second external electronic devices comprises:

if a number of devices connected to the external electronic device having a highest adjusted data rate is smaller than a predetermined critical value (507), selecting (511) the external electronic device having the highest adjusted data traffic rate; and

if the number of devices connected to the external electronic device having the highest adjusted data rate is equal to or greater than the predetermined critical value, selecting (509) the other of the first and second external electronic devices.

13. The method of claim 10, wherein the first short range wireless communication is WiFi, wherein the steps of determining the first and second data traffic rates includes:

determining a communication standard or version of the external electronic device based on information associated with a mode of the first short range wireless communication; and

determining the data traffic rate based on the determined communication standard or version and whether the external electronic device supports multi input multi output, MIMO,, and

wherein the communication standard or version is determined as a wireless communication protocol comprising at least one of institute of electrical and electronics engineers, IEEE, IEEE802.11b, IEEE802.11g, IEEE802.11a, IEEE802.11n HT20, IEEE802.11n HT40, IEEE802.11ac HT20, IEEE802.11ac HT40, or IEEE802.11ac HT80.

**Patentansprüche**

1. Elektronische Vorrichtung, umfassend:

eine erste und eine zweite Kommunikationsschnittstelle (160, 220), die jeweils eine erste und eine zweite drahtlose Nahbereichskommunikation unterstützen; und

einen Prozessor (120, 210), der zu Folgendem konfiguriert ist:

Erlangen einer Signalstärke für jede einer Vielzahl von externen elektronischen Vorrichtungen durch die erste drahtlose Nahbereichskommunikation unter Verwendung der ersten Kommunikationsschnittstelle (160, 220);

Auswählen einer ersten und einer zweiten externen elektronischen Vorrichtung, die eine designierte Signalstärke erfüllen, aus der Vielzahl der externen elektronischen Vorrichtungen basierend auf der Signalstärke;

Empfangen erster Netzwerkinformationen, die der ersten externen elektronischen Vorrichtung entsprechen, und zweiter Netzwerkinformationen, die der zweiten externen elektronischen Vorrichtung entsprechen, durch die erste drahtlose Nahbereichskommunikation unter Verwendung der ersten Kommunikationsschnittstelle (160, 220);

Bestimmen einer ersten Datenverkehrsrate der ersten externen elektronischen Vorrichtung basierend auf den ersten Netzwerkinformationen und Bestimmen einer zweiten Datenverkehrsrate der zweiten externen elektronischen Vorrichtung basierend auf den zweiten Netzwerkinformationen;

Bestimmen einer angepassten ersten Datenverkehrsrate und einer angepassten zweiten Datenverkehrsrate darauf basierend, ob die zweite Kommunikationsschnittstelle (160, 220) aktiviert ist;

Auswählen mindestens einer von der ersten oder der zweiten externen elektronischen Vorrichtung basierend auf mindestens einer von der ersten oder der zweiten angepassten Datenverkehrsrate; und

Kommunizieren von Daten mit der ausgewählten externen elektronischen Vorrichtung durch die erste drahtlose Nahbereichskommunikation.

2. Elektronische Vorrichtung nach Anspruch 1, wobei der Prozessor (120, 210) ferner zu Folgendem konfiguriert ist: Empfangen von Informationen, die sich auf jede von der ersten und der zweiten externen elektronischen Vorrichtung beziehen, wobei die empfangenen Informationen Informationen beinhalten, die sich auf einen Nutzungsgrad beziehen; und weiteres Anpassen der angepassten ersten und der zweiten Datenverkehrsrate basierend auf den empfangenen Informationen.

3. Elektronische Vorrichtung nach Anspruch 1, wobei der Prozessor (120, 210) ferner konfiguriert ist, um die angepasste erste und angepasste zweite Datenverkehrsrate basierend auf der Signalstärke für jede von der ersten und der zweiten externen elektronischen Vorrichtung weiter anzupassen.

4. Elektronische Vorrichtung nach Anspruch 1, wobei der Prozessor (120; 210) ferner konfiguriert ist, um Informationen anzuzeigen, die sich auf die ausgewählte externe elektronische Vorrichtung beziehen, um von Informationen unterschieden zu werden, die sich auf eine nicht ausgewählte andere externe elektronische Vorrichtung beziehen.

5. Elektronische Vorrichtung nach Anspruch 1, wobei der Prozessor (120; 210) ferner zu Folgendem konfiguriert ist:

Bestimmen eines ersten Dämpfungsfaktors entsprechend der ersten externen elektronischen Vorrichtung basierend auf einer ersten Signalstärke entsprechend der ersten externen elektronischen Vorrichtung;
Bestimmen eines zweiten Dämpfungsfaktors entsprechend der zweiten externen elektronischen Vorrichtung basierend auf einer zweiten Signalstärke entsprechend der zweiten externen elektronischen Vorrichtung; und
weiteres Anpassen der angepassten ersten und angepassten zweiten Datenverkehrsrate unter Verwendung des entsprechenden ersten und entsprechenden zweiten Dämpfungsfaktors.

6. Elektronische Vorrichtung nach Anspruch 1, wobei
die erste Kommunikationsschnittstelle eine WiFi-Schnittstelle (223, 323) ist, die die erste drahtlose Nahbereichskommunikation unterstützt; und
der Prozessor (120, 210) funktionsfähig mit der WiFi-Schnittstelle (223, 323) verbunden und zu Folgendem konfiguriert ist:

Scannen einer Vielzahl von Zugangspunkten (access points, Aps) mit der gleichen Service Set Identification, SSID, durch die WiFi-Schnittstelle (223, 323); und
Bestimmen einer Datenverkehrsrate durch Berechnen einer Datenverkehrsrate für jeden AP basierend auf einem Beacon-Frame, das von jedem AP empfangen wird.

7. Elektronische Vorrichtung nach Anspruch 6, wobei der Berechnungsvorgang der Datenverkehrsrate Folgendes umfasst:

Bestimmen der Datenverkehrsrate des AP basierend auf Informationen, die mit einem Modus der ersten drahtlosen Nahbereichskommunikation in einem Beacon-Frame, das von dem AP empfangen wird, assoziiert sind;
Bestimmen eines Dämpfungsfaktors basierend auf einer Signalstärke des Beacon-Frames oder eines Nutzungsgrads des AP, der in dem Beacon-Frame enthalten ist, und
Berechnen einer geschätzten Datenrate (estimate data rate, EDR) des AP durch Multiplizieren des Dämpfungsfaktors und der Datenverkehrsrate.

8. Elektronische Vorrichtung nach Anspruch 7, wobei, wenn der AP eine Vielzahl von Kommunikationskanälen unterstützt, die durch die Basic Service Set Identification BSSID identifiziert sind, und wenn die elektronische Vorrichtung das Beacon-Frame für jeden der Vielzahl von Kommunikationskanälen empfängt, der Prozessor (120, 210) ferner konfiguriert ist, um die EDR für jeden der Vielzahl von Kommunikationskanälen zu berechnen.

9. Verfahren zum Betreiben einer elektronischen Vorrichtung mit einer ersten und einer zweiten Kommunikationsschnittstelle (160, 220), die jeweils eine erste und eine zweite drahtlose Nahbereichskommunikation unterstützen, das Verfahren umfassend:

Erlangen einer Signalstärke für jede einer Vielzahl von externen elektronischen Vorrichtungen durch die erste drahtlose Nahbereichskommunikation;
Auswählen einer ersten und einer zweiten externen elektronischen Vorrichtung, die eine designierte Signalstärke erfüllen, aus der Vielzahl der externen elektronischen Vorrichtungen basierend auf der Signalstärke;
Empfangen (410) erster Netzwerkinformationen, die der ersten externen elektronischen Vorrichtung entsprechen, und zweiter Netzwerkinformationen, die der zweiten externen elektronischen Vorrichtung entsprechen, durch die erste drahtlose Nahbereichskommunikation;
Bestimmen (420) einer ersten Datenverkehrsrate der ersten externen elektronischen Vorrichtung basierend auf den ersten Netzwerkinformationen und Bestimmen einer zweiten Datenverkehrsrate der zweiten externen elektronischen Vorrichtung basierend auf den zweiten Netzwerkinformationen;
Bestimmen (430) einer angepassten ersten Datenverkehrsrate und einer angepassten zweiten Datenverkehrsrate darauf basierend, ob die zweite Kommunikationsschnittstelle (160, 220) aktiviert ist;
Auswählen (440) mindestens einer von der ersten oder der zweiten externen elektronischen Vorrichtung basierend auf mindestens einer von der ersten oder der zweiten Datenverkehrsrate; und
Kommunizieren (450) von Daten mit der ausgewählten externen elektronischen Vorrichtung durch die erste drahtlose Nahbereichskommunikation.

**10.** Verfahren nach Anspruch 9, wobei:
die erste Datenverkehrsrate der ersten externen elektronischen Vorrichtung und die zweite Datenverkehrsrate der zweiten externen elektronischen Vorrichtung basierend von Informationen bestimmt werden, die mit einem ersten drahtlosen Nahbereichskommunikationsstandard oder -version verbunden sind, der/die von der ersten externen elektronischen Vorrichtung und von der zweiten externen elektronischen Vorrichtung in Signalen unterstützt werden kann, die von der ersten und der zweiten externen elektronischen Vorrichtung über die erste und die zweite drahtlose Nahbereichskommunikation empfangen werden, und das Verfahren ferner Folgendes umfasst:

Bestimmen eines ersten Dämpfungsfaktors basierend auf mindestens einem von einer Signalstärke des Signals und/oder eines Nutzungsgrads der ersten externen elektronischen Vorrichtung, wobei die erste Datenverkehrsrate der ersten externen elektronischen Vorrichtung durch Multiplizieren des Dämpfungsfaktors und der ersten Datenverkehrsrate angepasst wird; und
Bestimmen eines zweiten Dämpfungsfaktors basierend auf mindestens einem von einer Signalstärke des Signals und/oder eines Nutzungsgrads der zweiten externen elektronischen Vorrichtung, wobei die zweite Datenverkehrsrate der zweiten externen elektronischen Vorrichtung durch Multiplizieren des Dämpfungsfaktors und der zweiten Datenverkehrsrate angepasst wird; und
wobei die erste oder die zweite externe elektronische Vorrichtung basierend auf der angepassten Datenverkehrsrate ausgewählt wird.

**11.** Verfahren nach Anspruch 10, wobei die Auswahl der ersten oder der zweiten externen elektronischen Vorrichtung Folgendes umfasst:

wenn eine von der ersten und der zweiten externen elektronischen Vorrichtung die höchste Datenverkehrsrate aufweist, Auswählen der ersten oder der zweiten externen elektronischen Vorrichtung mit der höchsten angepassten Datenverkehrsrate; und
wenn sowohl die erste als auch die zweite externe elektronische Vorrichtung die höchste angepasste Datenverkehrsrate aufweisen, Auswählen aus der ersten und der zweiten externen elektronischen Vorrichtung einer externen elektronischen Vorrichtung mit der geringsten Anzahl von verbundenen Vorrichtungen.

**12.** Verfahren nach Anspruch 10, wobei eine Auswahl der ersten oder der zweiten externen elektronischen Vorrichtung Folgendes umfasst:

wenn eine Anzahl an Vorrichtungen, die mit der externen elektronischen Vorrichtung mit einer höchsten angepassten Datenrate verbunden sind, kleiner ist als ein vorbestimmter kritischer Wert (507) ist, Auswählen (511) der externen elektronischen Vorrichtung mit der höchsten angepassten Datenverkehrsrate; und
wenn die Anzahl an Vorrichtungen, die mit der externen elektronischen Vorrichtung mit einer höchsten angepassten Datenrate verbunden sind, gleich wie oder größer als der vorbestimmte kritische Wert ist, Auswählen (509) der anderen von der ersten und der zweiten externen elektronischen Vorrichtung.

**13.** Verfahren nach Anspruch 10, wobei die erste drahtlose Nahbereichskommunikation WiFi ist, wobei die Schritte eines Bestimmes der ersten und der zweiten Datenverkehrsrate Folgendes umfassen:

Bestimmen eines Kommunikationsstandards oder einer Kommunikationsversion der externen elektronischen Vorrichtung basierend auf Informationen, die mit einem Modus der ersten drahtlosen Nahbereichskommunikation assoziiert sind; und
Bestimmen der Datenverkehrsrate basierend auf dem bestimmten Kommunikationsstandard oder der bestimmten Kommunikationsversion und ob die externe elektronische Vorrichtung Multi-Input-Multi-Output, MIMO, unterstützt, und
wobei der Kommunikationsstandard oder die Kommunikationsversion als ein drahtloses Kommunikationsprotokoll bestimmt ist, umfassend mindestens eines von Institute of Electrical and Electronics Engineers, IEEE, IEEE802.11b, IEEE802.11g, IEEE802.11a, IEEE802.11n HT20, IEEE802.11n HT40, IEEE802.11ac HT20, IEEE802.11ac HT40 oder IEEE802.11ac HT80.

**Revendications**

**1.** Dispositif électronique comprenant :

une première et une seconde interfaces de communication (160, 220), prenant en charge respectivement une première et une seconde communications sans fil à courte portée ; et
un processeur (120, 210) configuré pour :

obtenir une intensité de signal pour chacun d'une pluralité de dispositifs électroniques externes via la première communication sans fil à courte portée en utilisant la première interface de communication (160, 220) ;

sélectionner des premier et second dispositifs électroniques externes satisfaisant une intensité de signal désignée parmi la pluralité de dispositifs électroniques externes sur la base de l'intensité de signal ;

recevoir des premières informations de réseau correspondant au premier dispositif électronique externe et des secondes informations de réseau correspondant au second dispositif électronique externe via la première communication sans fil à courte portée en utilisant la première interface de communication (160, 220) ;

déterminer un premier débit de trafic de données du premier dispositif électronique externe sur la base des premières informations de réseau et déterminer un second débit de trafic de données du second dispositif électronique externe sur la base des secondes informations de réseau ;

déterminer un premier débit de trafic de données ajusté et un second débit de trafic de données ajusté en fonction de l'activation ou non de la seconde interface de communication (160, 220);

sélectionner au moins l'un des premier ou second dispositifs électroniques externes sur la base d'au moins l'un des premier ou second débits de trafic de données ajustés ; et

communiquer des données avec le dispositif électronique externe sélectionné via la première communication sans fil à courte portée.

2. Dispositif électronique selon la revendication 1, dans lequel le processeur (120, 210) est en outre configuré pour :
recevoir des informations relatives à chacun des premier et second dispositifs électroniques externes, dans lequel les informations reçues comprennent des informations relatives à un degré d'utilisation ; et ajuster encore les premier et second débits de trafic de données ajustés sur la base des informations reçues.

3. Dispositif électronique selon la revendication 1, dans lequel le processeur (120, 210) est en outre configuré pour ajuster encore les premier et second débits de trafic de données ajustés sur la base de l'intensité de signal pour chacun des premier et second dispositifs électroniques externes.

4. Dispositif électronique selon la revendication 1, dans lequel le processeur (120 ; 210) est en outre configuré pour afficher des informations relatives au dispositif électronique externe sélectionné à distinguer des informations relatives à un autre dispositif électronique externe non sélectionné.

5. Dispositif électronique selon la revendication 1, dans lequel le processeur (120 ; 210) est en outre configuré pour :

déterminer un premier facteur d'atténuation correspondant au premier dispositif électronique externe sur la base d'une première intensité de signal correspondant au premier dispositif électronique externe ;

déterminer un second facteur d'atténuation correspondant au second dispositif électronique externe sur la base d'une seconde intensité de signal correspondant au second dispositif électronique externe ; et

ajuster encore les premier et second débits de trafic de données ajustés en utilisant les premier et second facteurs d'atténuation correspondants.

6. Dispositif électronique selon la revendication 1, dans lequel
la première interface de communication est une interface WiFi (223, 323) prenant en charge la première communication sans fil à courte portée ; et
le processeur (120, 210) est connecté de manière fonctionnelle à l'interface WiFi (223, 323) et est configuré pour :

balayer une pluralité de points d'accès, AP, ayant une même identification d'ensemble de services, SSID, via l'interface WiFi (223, 323) ; et

déterminer un débit de trafic de données en calculant un débit de trafic de données pour chaque AP sur la base d'une trame de balise reçue depuis chaque AP.

7. Dispositif électronique selon la revendication 6, dans lequel l'opération de calcul du débit de trafic de données comprend :

la détermination du débit de trafic de données de l'AP sur la base d'informations associées à un mode de la première communication sans fil à courte portée dans une trame de balise reçue depuis l'AP ;

la détermination d'un facteur d'atténuation sur la base d'au moins l'un d'une intensité de signal de la trame de balise ou d'un degré d'utilisation de l'AP contenu dans la trame de balise ; et

le calcul d'un débit de données estimé, EDR, de l'AP en multipliant le facteur d'atténuation et le débit de trafic de données.

8. Dispositif électronique selon la revendication 7, dans lequel si l'AP prend en charge une pluralité de canaux de communication identifiés par une identification d'ensemble de services de base, BSSID, et si le dispositif électronique reçoit la trame de balise pour chacun de la pluralité de canaux de communication, le processeur (120, 210) est en outre configuré pour calculer l'EDR pour chacun de la pluralité de canaux de communication.

9. Procédé de fonctionnement d'un dispositif électronique ayant une première et une seconde interfaces de communication (160, 220) prenant en charge des première et seconde communications sans fil respectives à courte portée, le procédé comprenant :

l'obtention d'une intensité de signal pour chacun d'une pluralité de dispositifs électroniques externes par le biais de la première communication sans fil à courte portée ;

la sélection de premier et second dispositifs électroniques externes satisfaisant une intensité de signal désignée parmi la pluralité de dispositifs électroniques externes sur la base de l'intensité de signal ; la réception (410) de premières informations de réseau correspondant au premier dispositif électronique externe et de secondes informations de réseau correspondant au second dispositif électronique externe via la première communication sans fil à courte portée ;

la détermination (420) d'un premier débit de trafic de données du premier dispositif électronique externe sur la base des premières informations de réseau et la détermination d'un second débit de trafic de données du second dispositif électronique externe sur la base des secondes informations de réseau ;

la détermination (430) d'un premier débit de trafic de données ajusté et d'un second débit de trafic de données ajusté en fonction de l'activation ou non de la seconde interface de communication (160, 220) ;

la sélection (440) d'au moins l'un des premier ou second dispositifs électroniques externes sur la base d'au moins l'un des premier ou second débits de trafic de données ; et

la communication (450) des données avec le dispositif électronique externe sélectionné via la première communication sans fil à courte portée.

10. Procédé selon la revendication 9, dans lequel :

le premier débit de trafic de données du premier dispositif électronique externe et le second débit de trafic de données du second dispositif électronique externe sont déterminés sur la base d'informations associées à une première norme ou version de communication sans fil à courte portée prise en charge par le premier dispositif électronique externe et par le second dispositif électronique externe dans des signaux reçus depuis les premier et second dispositifs électroniques externes via les première et seconde communications sans fil à courte portée, et le procédé comprend en outre :

la détermination d'un premier facteur d'atténuation sur la base d'au moins l'un d'une intensité de signal du signal ou d'un degré d'utilisation du premier dispositif électronique externe, moyennant quoi le premier débit de trafic de données du premier dispositif électronique externe est ajusté en multipliant le facteur d'atténuation et le premier débit de trafic de données ; et

la détermination d'un second facteur d'atténuation sur la base d'au moins l'un d'une intensité du signal du signal ou d'un degré d'utilisation du second dispositif électronique externe, moyennant quoi le second débit de trafic de données du second dispositif électronique externe est ajusté en multipliant le facteur d'atténuation et le second débit de trafic de données,

moyennant quoi le premier ou le second dispositif électronique externe est sélectionné sur la base du débit de trafic de données ajusté.

11. Procédé selon la revendication 10, dans lequel la sélection des premier ou second dispositifs électroniques externes comprend :

si l'un des premier et second dispositifs électroniques externes a un débit de trafic de données le plus élevé, la sélection du premier ou du second dispositif électronique externe ayant le débit de trafic de données ajusté le plus élevé ; et

si les premier et second dispositifs électroniques externes ont le débit de trafic de données ajusté le plus élevé, la sélection parmi les premier et second dispositifs électroniques externes d'un dispositif électronique externe ayant le plus petit nombre de dispositifs connectés.

12. Procédé selon la revendication 10, dans lequel la sélection des premier ou second dispositifs électroniques externes comprend :

si un certain nombre de dispositifs connectés au dispositif électronique externe ayant un débit de données ajusté le plus élevé est inférieur à une valeur critique prédéterminée (507), la sélection (511) du dispositif électronique externe ayant le débit de trafic de données ajusté le plus élevé ; et
si le nombre de dispositifs connectés au dispositif électronique externe ayant le débit de données ajusté le plus élevé est égal ou supérieur à la valeur critique prédéterminée, la sélection (509) de l'autre des premier et second dispositifs électroniques externes.

13. Procédé selon la revendication 10, dans lequel la première communication sans fil à courte portée est le WiFi, dans lequel les étapes de détermination des premier et second débits de trafic de données comprennent :

la détermination d'une norme ou d'une version de communication du dispositif électronique externe sur la base d'informations associées à un mode de la première communication sans fil à courte portée ; et
la détermination du débit de trafic de données sur la base de la norme ou de la version de communication déterminée et selon la prise en charge ou non par le dispositif électronique externe de la technologie d'entrées multiples, sorties multiples, MIMO, et
dans lequel la norme ou la version de communication est déterminée comme un protocole de communication sans fil comprenant au moins l'un parmi IEEE802.11b, IEEE802.11g, IEEE802.11a, IEEE802.11n HT20, IEEE802.11n HT40, IEEE802.11ac HT20, IEEE802.11ac HT40 ou IEEE802.11ac HT80 de l'institut des ingénieurs électricien et électroniciens, IEEE.

[Fig. 1]

[Fig. 2]

**ELECTRONIC DEVICE (201)**

COMMUNICATION INTERFACE (220)
- RF INTERFACE (229)
- CELLULAR INTERFACE (221)
- WIFI INTERFACE (223)
- BT INTERFACE (225)
- GPS INTERFACE (227)
- NFC INTERFACE (228)

INPUT UNIT (250)
- TOUCH PANEL (252)
- PEN SENSOR (254)
- KEY (256)
- ULTRASONIC INPUT DEVICE (258)

DISPLAY (260)
- PANEL (262)
- HOLOGRAM DEVICE (264)
- PROJECTOR (266)

INTERFACE (270)
- HDMI (272)
- USB (274)
- OPTICAL INTERFACE (276)
- D-SUB (278)

SENSOR (240)
- GESTURE SENSOR — 240A
- GYRO SENSOR — 240B
- ATMOSPHERIC PRESSURE SENSOR — 240C
- MAGNETIC SENSOR — 240D
- ACCELERATION SENSOR — 240E
- GRIP SENSOR — 240F
- PROXIMITY SENSOR — 240G
- RGB SENSOR — 240H
- BIO SENSOR — 240I
- TEMPERATURE/HUMIDITY SENSOR — 240J
- ILLUMINATION SENSOR — 240K
- UV SENSOR — 240M

APPLICATION PROCESSOR (AP) (210)

SUBSCRIBER IDENTIFICATION MODULE (224)

MEMORY (230)
- INTERNAL (232)
- EXTERNAL (234)

AUDIO (280)
- SPEAKER (282)
- RECEIVER (284)
- EARPHONE (286)
- MIKE (288)

CAMERA (291)

INDICATOR (297)

MOTOR (298)

PMM (295)
- BATTERY (296)

EP 3 384 710 B1

[Fig. 3]

EP 3 384 710 B1

## 310

### APPLICATIONS (370)

| HOME (371) | DIALER (372) | SMS/MMS (373) | IM (374) | BROWSER (375) | CAMERA (376) | ALARM (377) |
|---|---|---|---|---|---|---|
| CONTACT (378) | VOICE DIAL (379) | EMAIL (380) | CALENDAR (381) | MEDIA PLAYER (382) | ALBUM (383) | CLOCK (384) |

### API (360)

### MIDDLEWARE (330)

| APPLICATION MANAGER (341) | WINDOW MANAGER (342) | MULTIMEDIA MANAGER (343) | RESOURCE MANAGER (344) | |
|---|---|---|---|---|
| POWER MANAGER (345) | DATABASE MANAGER (346) | PACKAGE MANAGER (347) | CONNECTION MANAGER (348) | RUNTIME LIBRARY (335) |
| NOTIFICATION MANAGER (349) | LOCATION MANAGER (350) | GRAPHIC MANAGER (351) | SECURITY MANAGER (352) | |

### KERNEL (320)

| SYSTEM RESOURCE MANAGER (321) | DEVICE DRIVER (323) |
|---|---|

[Fig. 4]

```
        ┌─────────────┐
        │    START    │
        └──────┬──────┘
               │
               ▼
┌────────────────────────────────────────────┐
│   RECEIVE NETWORK INFORMATION OF AP          │───410
└──────────────────┬───────────────────────────┘
                   │
                   ▼
┌────────────────────────────────────────────┐
│   DETERMINE DATA TRAFFIC RATE OF             │
│   AP BY USING NETWORK INFORMATION            │───420
└──────────────────┬───────────────────────────┘
                   │
                   ▼
┌────────────────────────────────────────────┐
│  ADJUST DATA TRAFFIC RATE, BASED ON AT LEAST ONE OF │
│  SIGNAL STRENGTH, WHETHER ANOTHER SHORT RANGE       │
│  COMMUNICATION INTERFACE IS ACTIVATED,              │───430
│  AND DEGREE OF UTILIZATION OF AP                     │
└──────────────────┬───────────────────────────┘
                   │
                   ▼
┌────────────────────────────────────────────┐
│   SELECT AP BASED ON DATA TRAFFIC RATE       │───440
└──────────────────┬───────────────────────────┘
                   │
                   ▼
┌────────────────────────────────────────────┐
│   PERFORM DATA COMMUNICATION                 │───450
└──────────────────┬───────────────────────────┘
                   │
                   ▼
        ┌─────────────┐
        │     END     │
        └─────────────┘
```

[Fig. 5a]

```
                                    ┌──────────────┐
                                    │    START     │
                                    └──────┬───────┘
                                           │              501
                                           ▼
                              ┌──────────────────────────┐
                              │  SCAN AP (EDR_MAX_AP)     │
                              │  INCLUDING THE HIGHEST EDR │
                              └────────────┬──────────────┘
                                           │           502
                                           ▼
                                    ╱────────────╲            NO
                              ─────< TWO OR MORE EDR_MAX_AP? >─────────►( A )
                                    ╲────────────╱
                                           │ YES
                                           ▼            503
                                    ╱──────────────────╲
                          NO       ╱  IS THERE AP OFFERING ╲
                    ┌─────────────<  "INFORMATION INDICATING THE NUMBER OF  >
                    │             ╲   CONNECTED DEVICES"?  ╱
                    │              ╲──────────────────────╱
                    │        505              │ YES        504
                    ▼                         ▼
      ┌───────────────────────────┐  ┌────────────────────────────────┐
      │ RANDOMLY SELECT ONE OF     │  │ PREFERENTIALLY SELECT AP INCLUDING THE │
      │ EDR_MAX_APS                │  │ SMALLEST NUMBER OF CONNECTED DEVICES   │
      └────────────┬──────────────┘  └────────────────┬───────────────┘
                   │◄───────────────────────────────────┘
                   ▼
             ┌──────────┐
             │   END    │
             └──────────┘
```

[Fig. 5b]

EP 3 384 710 B1

(A)

506
DOES EDR_MAX_AP OFFER "INFORMATION INDICATING THE NUMBER OF CONNECTED DEVICES" ?
NO

512
OTHER AP IN THE SAME GROUP?
NO

YES

507
THE NUMBER OF CONNECTED DEVICES IS EQUAL TO OR GREATER THAN CRITICAL VALUE?
NO

YES

YES

508
OTHER AP IN THE SAME GROUP?
NO

510
RANDOMLY SELECT ONE OF APS BELONGING TO OTHER GROUP

511
SELECT EDR_MAX_AP

513
RANDOMLY SELECT ONE OF APS

514
SELECT EDR_MAX_AP

YES

509
PREFERENTIALLY SELECT AP HAVING THE SMALLEST NUMBER OF CONNECTED DEVICES

END

[Fig. 6a]

621  622

AP$_1$ 5GHz 149CH
11ac VHT40
-59dB, sc(1)
EDR (150)

AP$_2$ 5GHz 40CH
11ac VHT40
-65dB, sc(3)
EDR (150)

610

AP$_4$ 2GHz 9CH
11n HT20
-60dB, sc(5)
EDR (90)

624

AP$_3$ 5GHz 104CH
11ac VHT40
-65dB, sc(8)
EDR (150)

623

[Fig. 6b]

632

631

AP$_1$ 5GHz 149CH
11ac VHT40
-58dB, sc(1)
EDR (209)

AP$_2$ 5GHz 40CH
11n HT40
-50dB, sc(3)
EDR (184)

610

AP$_4$ 2GHz 9CH
11n HT20
-45dB, sc(5)
EDR (90)

634

AP$_3$ 5GHz 104CH
11n HT40
-65dB, sc(8)
EDR (140)

633

[Fig. 6c]

[Fig. 7]

Scan List

T wifi zone_secure

EAP, ID:0, Current
Priority: 1
Channels: 1 5 13 60 100 116 ⟶ A
BSSIDs: 10
0a:30:0d:81:fe:d2 ch100 -59dB cu29(11) ⟶ B
11n_HT40(184.0)
06:30:0d:82:15:e2 ch1 -60dB cu123(15)
11n_HT20(81.0)
06:30:0d:81:fe:c2 ch1 -57dB cu123(20)
11n_HT20(90.0)
0a:30:0d:82:15:f2 ch116 -77dB cu5(5)
11n_HT40(0.8)
0a:30:0d:76:db:b2 ch60 -82dB cu3(5)
11n_HT40(0.4)
06:30:0d:77:e5:e2 ch13 -86dB cu55(7)
11n_HT20(0.5)
06:30:0d:85:48:62 ch5 -91dB cu61(1)
11n_HT20(0.3)
06:30:0d:77:54:82 ch1 -92dB cu114(3)
11n_HT20(0.3)
06:30:0d:76:72:62 ch5 -92dB cu57(0)
11n_HT20(0.3)
06:30:0d:85:57:22 ch13 -95dB cu47(4)
11n_HT20(0.2)

-57dB

[Fig. 8]

822    821

820

← Wi-Fi

⚙ Wi-Fi Setting

810

📶 T wifi zone secure

811 — Best  CONNECTED TO BEST AP  — 812

📶 A_KCW2

📶 DL85_KCW_2

📶 DL85_KCW_5

📶 24G_1ch_No_Internet

📶 Portal

CONNECTED TO T WIFI ZONE_SECURE (BEST)  — 830

📶 A_KCW5

[Fig. 9]

EP 3 384 710 B1

37

**EP 3 384 710 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014126388 A1
- WO 2015150717 A1
- US 2015098392 A1